(19) Europäisches Patentamt
European Patent Office
Office européen des brevets

(11) EP 3 992 260 A1

(12) EUROPÄISCHE PATENTANMELDUNG

(43) Veröffentlichungstag:
**04.05.2022 Patentblatt 2022/18**

(21) Anmeldenummer: **21177037.5**

(22) Anmeldetag: **01.06.2021**

(51) Internationale Patentklassifikation (IPC):
***C09J 7/10*** *(2018.01)* ***C09J 175/06*** *(2006.01)*
***C09J 167/00*** *(2006.01)* ***C08G 63/91*** *(2006.01)*

(52) Gemeinsame Patentklassifikation (CPC):
(C-Sets verfügbar)
**C09J 7/10; C08G 63/918; C09J 11/04; C09J 11/06; C09J 133/08; C09J 133/10; C09J 133/20; C09J 167/00; C09J 175/06; C09J 177/00;**
C08G 2170/40; C09J 2475/00 (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **29.06.2020 DE 102020208059**

(71) Anmelder: **tesa SE**
**22848 Norderstedt (DE)**

(72) Erfinder:
- **KEITE-TELGENBÜSCHER, Dr. Klaus**
  **22529 Hamburg (DE)**
- **MOEHRKE, Claudia**
  **22605 Hamburg (DE)**
- **HANNEMANN, Frank**
  **22047 Hamburg (DE)**
- **KRAMP, Stefan**
  **22529 Hamburg (DE)**

(74) Vertreter: **tesa SE**
**Hugo-Kirchberg-Straße 1**
**22848 Norderstedt (DE)**

# (54) LAGERSTABILES REAKTIVES HAFTKLEBEBAND

(57) Die Erfindung betrifft einen reaktiven Haftklebstoffilm mit (a) einer polymeren Filmbildner-Matrix, (b) einer oder mehreren Reaktivkomponente(n) in einem Masseanteil von zumindest 30 Gew.-%, bezogen auf die Summe der Komponenten (a), (b) und (c), und (c) einem Reagenz, ausgewählt aus einem Initiator, insbesondere Radikalinitiator, oder einem Härter oder einem Aktivator, wobei die polymere Filmbildner-Matrix zu mindestens 50 Gew.-% ein kristallisierbares Polymer ist, das beim Abkühlen ausgehend von einer Temperatur, die mindestens 30 K oberhalb der Peaktemperatur des Schmelzpeaks liegt, zumindest aber 100 °C beträgt, bei einer Abkühlgeschwindigkeit von 10 K/min in der dynamischen Differenzkalorimetrie (DSC) eine Kristallisationsenthalpie von weniger als 1 J/g aufweist.

EP 3 992 260 A1

(52) Gemeinsame Patentklassifikation (CPC): (Forts.)

C-Sets
**C09J 133/08, C08L 75/06, C08K 3/36;**
**C09J 133/10, C08L 75/06, C08K 3/36;**
**C09J 133/20, C08L 75/06, C08K 3/36;**
**C09J 175/06, C08L 33/20, C08K 3/36**

## Beschreibung

Die Erfindung betrifft einen härtbaren Haftklebstofffilm, umfassend (a) eine polymere Filmbildner-Matrix, (b) eine oder mehrere Reaktivkomponente(n) und (c) ein Reagenz, ausgewählt aus einem Initiator, insbesondere Radikalinitiator, oder einem Aktivator oder einem Katalysator. Die Erfindung betrifft weiterhin ein Mehrkomponenten-Filmsystem umfassend zwei oder mehr der vorstehend bezeichneten Filme, von denen ein Teil der Filme einen Initiator und ein anderer Teil der Filme einen Aktivator, einen Katalysator beziehungsweise Beschleuniger umfassen.

Reaktive, raumtemperaturhärtende, zum Beispiel auf der Polymerisation von Acrylatmonomeren oder Epoxidharzen basierende Haftklebebänder, werden seit einigen Jahren entwickelt und haben einen hohen Reifegrad erreicht. Ein wesentliches Problem ist aber die Lagerstabilität der nicht ausgehärteten Klebebänder. Dabei soll die Lagerung ebenfalls bei Raumtemperatur erfolgen.

Reaktive Haftklebmassen und daraus hergestellte Klebebänder werden in einer Reihe von Schriften des Standes der Technik beschrieben. Diese Schriften beinhalten das Konzept, als Flüssigklebstoff bekannte Systeme in Filmform zu bringen und anzubieten, indem eine reaktive Komponente - etwa auf Basis von Acrylmonomeren oder Epoxidverbindungen - in einem Matrixfilm eingebracht werden, und zwar in Gegenwart von Initiatoren, Aktivatoren und/oder Beschleunigern, die aber im Lagerungszustand dieser Filme noch keine Reaktion auslösen. Die Reaktion - etwa eine Polymerisation beziehungsweise Härtung - der reaktiven Komponente kann durch äußere Einflüsse starten - wie etwa durch Wärme, Feuchtigkeit, Plasma, Strahlung und so weiter - oder etwa beispielswiese dadurch, dass zwei Filme der vorgenannten Art, von denen einer einen Initiator und der andere einen Aktivator erhalten, miteinander in direkten Kontakt gebracht werden und der Initiator durch den Aktivator erst aktiviert wird. So bekommt man ein Zwei-Komponenten-Klebesystem in Filmform.

So werden etwa Zweikomponentenklebesysteme auf Basis von Acrylmonomeren in Form haftklebriger Filme (Klebebändern) in WO 2014 202402 A, WO 2015 062809 A, WO2018 104053 A und WO 2019 101728 A beschrieben. Die WO 2017 174303 A und die WO 2017 186528 A zeigen Reaktivsysteme auf Epoxidbasis für derartige Klebstofffilmsysteme.

Die Schriften WO 2015 150251 A und WO 2017 021085 A offenbaren Klebefilme, die mittels Plasmabeaufschlagung aktiviert werden. Die WO 2017 102282 hingegen stellt einen Klebefilm vor, der eine laserablatierbare Schicht umfasst; durch Entfernung dieser Schicht mittels eines Lasers können Reagenzien in Kontakt gebracht und eine Härtungsreaktion gestartet werden.

Viele der nach dem Stand der Technik hergestellten reaktiven Haftklebebänder zeigen allerdings bereits nach wenigen Wochen eine deutliche Abnahme des Tacks des nicht ausgehärteten Klebebands und der nach der Härtung erreichten klebtechnischen Performance. Als Tack - oder Anfassklebrigkeit - wird dabei die Eigenschaft des Klebstoffs bezeichnet, nach Inkontaktbringen mit einem Substrat bereits unmittelbar und ohne erhöhten Anpressdruck auf diesem anzuhaften. Zu der klebtechnischen Performance gehören Eigenschaften wie die Verklebungsfestigkeit nach dem Auffließen des Klebstoffs auf das Substrat und gegebenenfalls erfolgter Aushärtung.

Reaktive Haftklebebänder sind häufig aus einer - üblicherweise bezüglich der Härtungsreaktion inerten, aber möglicherweise auch mit reaktiven Gruppen versehenen - Polymermatrix, die in Form eines selbsttragenden Films vorliegen kann und deshalb auch als Filmbildner-Matrix bezeichnet wird, und darin verteilten reaktiven Verbindungen aufgebaut, die in Gegenwart von Initiatoren, Aktivatoren, Katalysatoren oder dergleichen zu einer Härtungsreaktion gebracht werden können, so dass sich in oder mit dem Matrixfilm ein Netzwerk aus den reaktiven Verbindungen ausbilden kann.

Im Stand der Technik werden dabei sowohl amorphe wie auch kristallisierbare Polymere als Filmbildner-Matrix eingesetzt. Als amorphe Polymere werden beispielsweise Ethylen-VinylacetatCopolymere mit einem Vinylacetatanteil von mehr als 55 % (z.B. Levamelt 700 der Fa. Arlanxeo), Acrylnitril-Copolymere (wie z.B. Nitril-Butadien-Kautschuk (NBR), Polyvinylbutyral (z.B. Mowital der Fa. Kuraray), Poly(Vinylidenchlorid-Co-Acrylonitril)) oder Phenoxyharze (z.B. PKHA der Fa. InChemRez) verwendet. Als kristallisierbare Polymere werden häufig aus dem Heißschmelzklebstoffbereich bekannte Polyurethane mit hoher Kristallisationsgeschwindigkeit eingesetzt (z.B. Desmomelt 530 der Fa. Covestro). Der Fachmann verwendet bevorzugt schnell kristallisierende Polymere für Filmklebstoffe, insbesondere Heißschmelzklebstoffformulierungen, da hiermit eine kurze Verfestigungszeit erreicht werden kann. So werden entsprechende Polymere bereits vom Hersteller bezüglich ihrer Kristallisationsgeschwindigkeit charakterisiert. Dabei findet sich z.B. bei kristallisierbaren Polyurethan-Heißschmelzklebstoffen die große Mehrzahl der im Markt verfügbaren Typen in den Charakterisierungsstufen "schnell", "sehr schnell" oder "extrem schnell" kristallisierend.

Aufgabe der Erfindung war es, ein raumtemperaturhärtendes reaktives Haftklebeband, insbesondere auf der Basis der Polymerisation von Acrylatmonomeren, zur Verfügung zu stellen, welches eine lange Lagerstabilität - insbesondere bei Raumtemperatur (23 °C) oder im Bereich der Raumtemperatur - mit einer hohen klebtechnischen Performance verbindet.

**Lösung der Aufgabe:**

Die Aufgabe wird gelöst durch einen reaktiven Haftklebstofffilm umfassend:

(a) eine polymere Filmbildner-Matrix,
(b) eine oder mehrere Reaktivkomponente(n) in einem Masseanteil von zumindest 30 Gew.-%, bezogen auf die Summe der Komponenten (a), (b) und (c), und
(c) zumindest ein Reagenz, ausgewählt aus einem Initiator, insbesondere Radikalinitiator, oder einem Härter oder einem Aktivator,

dadurch gekennzeichnet, dass
die polymere Filmbildner-Matrix ein kristallisierbares Polymer mit sehr geringer Kristallisationsgeschwindigkeit ist.

Der Haftklebstofffilm ist ein reaktiver Haftklebstofffilm. Reaktive Haftklebstofffilme sind dadurch gekennzeichnet, dass die zur Aushärtung führende Reaktion, die schlussendlich die hohen Verklebungsfestigkeiten bewirkt, im Wesentlichen erst bei der Verwendung, insbesondere nach der Applikation des Klebefilms, stattfindet. Im Gegensatz dazu stehen beispielweise vernetzte Haftklebemassen, deren Vernetzungsreaktion zur Kohäsionserhöhung im Wesentlichen vor der Anwendung geschieht, so dass der bereits vernetzte Film zur Verklebung eingesetzt wird. Dem Begriff "reaktiver Haftklebstoffilm" steht es dabei nicht entgegen, dass bereits eine - gegebenenfalls teilweise - Vernetzung vor der Applikation stattgefunden hat, sofern die wesentliche Härtungsreaktion wie vorstehend beschrieben abläuft.

In bevorzugter Vorgehensweise liegt die Komponente (b), nämlich die Reaktivkomponente(n), in einem Masseanteil von mehr als 35 Gew.-% vor. Weiter bevorzugt liegt die Komponente (b) in einem Masseanteil von weniger als 70 Gew.-% vor.

Reaktivkomponenten sind im erfindungsgemäßen Sinne solche Verbindungen, die funktionelle Gruppen derart aufweisen, dass sie - insbesondere in Gegenwart der Initiatoren, Härter beziehungsweise Aktivatoren - für eine Aufbaureaktion, insbesondere eine Vernetzungsreaktion, geeignet sind, die zu einer Härtung des Klebstofffilms führen. Eine solche Reaktion bedeutet eine wesentliche Erhöhung der Kohäsion des Films bis hin zur Durchhärtung, insbesondere derart, dass im ausgehärteten Produkt eine duroplastische Schicht entsteht. Die Härtungsreaktion kann im Wesentlichen über eine einzige Reaktivkomponente oder auch über zwei oder gegebenenfalls auch mehrere verschiedene, miteinander reagierende Reaktivkomponenten ablaufen. Dabei können auch interpenetrierende Netzwerke aufgebaut werden.

Als Initiatoren werden dem allgemeinen chemischen Sprachgebrauch entsprechend Stoffe bezeichnet, die einem Reaktionsgemisch zugegeben werden, um die gewünschte Reaktion zu ermöglichen und zu starten (zu initiieren), Initiatoren werden dabei üblicherweise selbst verbraucht (etwa durch Zerfall).

Härter sind solche - meist monomeren oder kurzkettigen - Verbindungen, die insbesondere bei Einsatz von oligomeren Verbindungen beziehungsweise Reaktivharzen - wie beispielsweise Epoxidharzen - mit diesen reagieren und bei der Härtungsreaktion mitwirken, wie sie etwa beispielweise als zweite Komponente, neben der Reaktivkomponente, einer Härtungsreaktion bei Flüssig-Zweikomponentensystemen bekannt sind.
Der Begriff Härter umfasst in der vorliegenden Schrift auch Vernetzer, die entsprechend zum Aufbau eines Netzwerks aus den Reaktivkomponenten beitragen, etwa als brückenbildende Komponenten zwischen den Reaktivkomponenten oder aus diesen gebildeten Oligo- oder Polymereinheiten.

Als Aktivatoren werden solche Verbindungen bezeichnet, die eingesetzt werden, wenn die auszuführende Reaktion alleine nicht oder nicht in ausreichendem Maße (hinreichend schnell) stattfindet, also insbesondere solche Verbindungen, die den Ablauf der Polymerisation erst ermöglicht oder beschleunigt. Aktivatoren bleiben bei Ablauf der aktivierten Reaktion in der Regel erhalten, werden also nicht verbraucht. Im Sprachgebrauch der Chemie werden für solche Verbindungen unterschiedliche Begriffe häufig bedeutungsübergreifend verwendet, etwa beispielhaft genannt:

Katalysatoren - Stoffe, die - üblicherweise bereits bei sehr geringen Konzentrationen - die Reaktionsgeschwindigkeit durch die Senkung der Aktivierungsenergie der chemischen Reaktion erhöhen, insbesondere ohne dabei selbst - signifikant - verbraucht zu werden;
Beschleuniger, auch Akzeleratoren genannt - ebenfalls Stoffe, deren Gegenwart die Reaktionsgeschwindigkeit eines Reaktivsystems heraufsetzen kann, gegebenenfalls aber auch unter Verbrauch oder Teilverbrauch des Beschleunigers.

Im Zusammenhang der vorliegenden Schrift bezieht sich die Wirkung des Initiators, Härters beziehungsweise Aktivators jeweils auf die durch die Reaktivkomponente(n) bewirkte Härtungsreaktion des Klebstofffilms.

Reaktivkomponenten und Initiatoren, Härter und Beschleuniger - letztere drei genannten jeweils entsprechend ihrer Anwesenheit - werden im Rahmen dieser Schrift zusammenfassend auch als Reaktivsystem bezeichnet.

Kristallisierbares Polymer mit sehr geringer Kristallisationsgeschwindigkeit bedeutet, dass als polymere Filmbildner-Matrix ein kristallisierbares Polymer eingesetzt wird, das beim Abkühlen ausgehend von einer Temperatur, die

mindestens 30 K oberhalb der Peaktemperatur des Schmelzpeaks liegt, zumindest aber 100 °C beträgt, bei einer Abkühlgeschwindigkeit von 10 K/min in der dynamischen Differenzkalorimetrie (DSC) eine Kristallisationsenthalpie von weniger als 1 J/g aufweist.
Als Peaktemperatur wird das Extremum des Peaks angesehen.
Ein kristallisierbares Polymer im Sinne dieser Schrift ist ein Polymer, welches in reinem Zustand in der ersten Aufheizkurve der DSC-Messung bei einer Aufheizrate von 10 K/min eine Kristallit-Schmelzenthalpie von mindestens 15 mJ/mg, bevorzugt von 25 mJ/mg, aufweist. Eine höhere Kristallinität trägt zu einer verbesserten Handhabbarkeit des Films bei. Weiter bevorzugt beträgt die Kristallit-Schmelzenthalpie dabei maximal 50 mJ/mg, da bei höherer Kristallinität die Lagerstabilität absinkt und die Haftklebrigkeit des reaktiven Films schwerer zu erhalten ist. Diese Messung erfolgt nach einer Lagerdauer von mindestens 1 Monat bei Umgebungsbedingungen, insbesondere bei Raumtemperatur, um dem Polymer zu ermöglichen, durch eventuelle Nachkristallisation in einen definierten Ausgangszustand vor der Messung zu gelangen. Als 'Umgebungsbedingungen' werden dabei Temperaturen im Bereich von 15 bis 30 °C und eine relative Luftfeuchte im Bereich von 30 bis 70 % verstanden.
Entsprechende kristallisierbare Polymere mit sehr geringer Kristallisationsgeschwindigkeit werden im Rahmen dieser Schrift auch als 'erfindungsgemäß gewählte kristallisierbare Polymere' bezeichnet.

Reaktive Haftklebstofffilme, deren Härtungsreaktion im Bereich von 15 bis 30 °C initiiert werden kann, werden auch als raumtemperaturhärtende Haftklebstofffilme beziehungsweise raumtemperaturhärtende reaktive Haftklebstofffilme bezeichnet. Maßgeblich dabei ist, dass die Härtungsreaktion durch entsprechende Triggerung - wie etwa durch den Einfluss energiereicher Strahlung oder durch Inkontaktbringen mit anderen Chemikalien - startet, also initiiert beziehungsweise aktiviert wird. Unerheblich dabei ist, ob die gesamte tatsächliche Härtungsreaktion in diesem Bereich abläuft, insbesondere auch im Falle gleichzeitiger oder nachfolgender Beaufschlagung mit einer höheren Temperatur stattfindet. Solche weiteren Erwärmungen sind etwa im Falle von Plasma- oder UV-Aktivierung nicht unüblich. Die zusätzliche Temperaturhöhung vermag zwar gegebenenfalls die Reaktionsgeschwindigkeit zu erhöhen, ist aber zum Start der Reaktion nicht erforderlich.
Erfindungsgemäß sehr vorteilhaft handelt es sich bei dem Haftklebstofffilm um einen raumtemperaturhärtenden reaktiven Haftklebstofffilm.
Erfindungsgemäß umfasst sind auch Haftklebstofffilme mit einer Härtungsreaktion, bei denen ein extern zugeführtes Agens zum Start und/oder zur Durchführung der Härtung erforderlich ist, wie zum Beispiel bei der Feuchtehärtung.
In einer vorteilhaften Variante der Erfindung ist die Härtung nicht nur bei einer Temperatur von weniger als 30 °C, insbesondere im Temperaturbereich von 15 bis 30 °C initiierbar, sondern dort auch bis zum gewünschten Härtungsgrad vollständig durchführbar.

Die mit der eingesetzten polymeren Filmbildner-Matrix hergestellten Klebstofffilme gemäß vorliegender Erfindung besitzen im unausgehärteten Zustand haftklebrige Eigenschaften und weisen im unausgehärteten Zustand Klebkräfte gemäß obenstehender Charakterisierung von Haftklebrigkeit auf; die erfindungsgemäßen Klebstofffilme sind somit haftklebrig. Als "haftklebrig" beziehungsweise mit der Vorsilbe "Haft..." werden Klebemassen sowie daraus hergestellte Klebstofffilme bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Im Sinne der vorliegenden Erfindung besitzt ein haftklebriger Klebstofffilm eine Klebkraft im unausgehärteten Zustand von wenigstens 1 N/cm. Die Klebkraft wird hierbei auf Polycarbonat (Makrolon GP 099, 3 mm dick, Rauheit wie in Norm spezifiziert) analog ISO 29862:2007 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wird eine geätzte PET-Folie mit einer Dicke von 36 μm verwendet, wie sie von der Firma Coveme (Italien) erhältlich ist. Die Verklebung eines 2 cm breiten Messstreifens wird dabei mittels einer Anrollmaschine mit 4 kg bei einer Temperatur von 23 °C vorgenommen. Der Klebstoffilm wird sofort nach der Applikation abgezogen. Der Messwert (in N/cm) ergibt sich als Mittelwert aus drei Einzelmessungen.
Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen beruht auf ihren adhäsiven Eigenschaften und die Wiederablösbarkeit auf ihren kohäsiven Eigenschaften.

Die Haftklebrigkeit der erfindungsgemäßen Haftklebstofffilme kann grundsätzlich daher resultieren, dass bereits die polymere Filmbildner-Matrix inhärente haftklebrige Eigenschaften aufweist. In der Regel ist dies jedoch nicht der Fall, das heißt das oder die für die polymere Filmbildner-Matrix eingesetzten Polymere sind nicht oder nur wenig haftklebrig. Üblicherweise resultiert die Haftklebrigkeit der erfindungsgemäßen Haftklebstofffilme dann aus der Zumischung der erfindungsgemäß eingesetzten Reaktivkomponente(n) (b) in den erfindungsgemäß genannten Mengen. Wie vorstehend ausgeführt ist aber etwa bei höherer Kristallinität die Haftklebrigkeit des reaktiven Films schwerer zu erhalten. In bestimmten Fällen kann es daher erforderlich oder vorteilhaft sein, zu Verbesserung der haftklebrigen Eigenschaften der Klebstofffilme zusätzlich Klebharze beizumischen.
Haftklebrige Eigenschaften lassen sich dementsprechend steuern durch Einmischung von Klebharzen; diese Zumischung ist für die vorliegende Erfindung jedoch nur optional und nicht zwingend erforderlich. Zu Klebharzen siehe auch weiter unten.

Überraschend zeigte sich, dass in der Formulierung eines erfindungsgemäßen reaktiven Haftklebstofffilms eine deutlich verbesserte Lagerstabilität des Films erreicht werden konnte. Bei Verwendung von kristallisierbaren Polymeren mit hoher Kristallisationsgeschwindigkeit verringerte sich der Tack bereits nach wenigen Tagen, bei amorphen Filmbildnerpolymeren ergaben sich deutliche Einbußen in der klebtechnischen Performance oder der Handhabbarkeit des Films.

**Polymere Filmbildner-Matrix (a)**

Der erfindungsgemäße Klebstoffilm umfasst eine polymere Filmbildner-Matrix (a), die den Gesamtanteil polymerer Filmbildner im Haftklebstoffilm bildet. Dieser umfasst zumindest ein kristallisierbares Polymer mit sehr geringer Kristallisationsgeschwindigkeit (erfindungsgemäß gewähltes kristallisierbares Polymer). Die polymere Filmbildner-Matrix kann weitere erfindungsgemäß gewählte kristallisierbare und/oder weitere, nicht der Definition für erfindungsgemäß gewählte kristallisierbare Polymere entsprechende Polymere enthalten. Sofern die polymere Filmbildner-Matrix mehrere Polymere umfasst, beträgt der Anteil erfindungsgemäß gewählter kristallisierbarer Polymere an der polymeren Filmbildner-Matrix bevorzugt zumindest 50 Gew.-%, mehr bevorzugt ist diese ausschließlich aus erfindungsgemäß gewählten kristallisierbaren Polymeren zusammengesetzt. Besonders bevorzugt wird die polymere Filmbildner-Matrix durch ein einziges erfindungsgemäß gewähltes kristallisierbares Polymer oder durch zwei erfindungsgemäß gewählte kristallisierbare Polymere gebildet.

Eine Aufgabe der polymeren Filmbildner-Matrix ist es, ein Grundgerüst für die Reaktivkomponente(n) und gegebenenfalls weiteren Bestandteile - wie Klebharze - bereitzustellen, so dass diese in einem Film oder einer Folie aus dem filmbildenden Polymer beziehungsweise den filmbildenden Polymeren eingelagert sind. Dazu sind die entsprechenden Reaktivkomponene(n) und gegebenenfalls weiteren Bestandteile insbesondere homogen in der Matrix verteilt.

Ein Polymer ist eine chemische Verbindung, die aus in der Regel organischen Ketten- oder verzweigten Molekülen (Makromolekül) besteht, die aus gleichen, gleichartigen oder verschiedenen Einheiten (den sogenannten Monomeren) aufgebaut ist (Polymerisation). Im einfachsten Fall besteht das Makromolekül nur aus einer Monomerart, man spricht dann auch von Homopolymeren. Copolymere sind aus verschiedenen Monomeren aufgebaut, die im Makromolekül statistisch verteilt, regelmäßig verteilt oder in Blöcken vorliegen können. Eine Monomereinheit im Sinne dieser Begriffsbestimmung ist die gebundene Form eines Monomers in einem Polymer. Im Rahmen dieser Schrift werden durch den Begriff "Polymer" sowohl Homopolymere als auch Copolymere verstanden. Als Filmbildner-Matrix geeignete Polymere besitzen ein gewichtsmittleres Molekulargewicht $M_w$ von mindestens 5.000 g/mol oder mehr, bevorzugt von mindestens 10.000 g/mol oder mehr.

Angaben zu gewichtsmittleren und zahlenmittleren Molmassen ($M_w$ beziehungsweise $M_n$) im Rahmen dieser Schrift beziehen sich auf die Bestimmung mittels Gelpermeationschromatographie (GPC). Als Eluent wurde THF (Tetrahydrofuran) mit 0,1 Vol.-% Trifluoressigsäure eingesetzt. Die Messung erfolgte bei 25 °C. Als Vorsäule wurde PSS-SDV, 5 $\mu$, $10^3$ Å, ID 8,0 mm x 50 mm verwendet. Zur Auftrennung wurden die Säulen PSS-SDV, 5 $\mu$, $10^3$ Å sowie $10^5$ Å und $10^6$ Å mit jeweils ID 8,0 mm x 300 mm eingesetzt. Die Probenkonzentration betrug 4 g/l, die Durchflussmenge 1,0 ml pro Minute. Es wurde gegen Polystyrol-Standards (kommerziell verfügbares ReadyCal-Kit Poly(styrene) high der Firma PSS Polymer Standard Service GmbH, Mainz) gemessen; anschließend universelle Umrechnung unter Nutzung der Mark-Houwink-Koeffizienten a und K in eine Poly(Methylmethacrylat)-Kalibrierung.

Erfindungsgemäß vorteilhaft einsetzbare kristallisierbare Polymere im Sinne der polymeren Filmbildner-Matrix (a) liegen bei Raumtemperatur (definiert als 23 °C) in reiner Form ganz oder teilweise als kristalline Domänen vor, das heißt sie sind nicht vollständig amorph.

Das Vorhandensein kristalliner Domänen ist durch DSC-Messungen feststellbar, beispielsweise durch Bestimmung der Schmelzenthalpie der Kristallite. Beim Schmelzen (teil-)kristalliner Polymere muss zur Umwandlung der festen kristallinen Strukturen in einen amorphen flüssigen (Schmelze-)Zustand zusätzliche Energie aufgewendet werden, erkennbar durch eine endotherme Enthalpieänderung. Der Vorgang erstreckt sich über einen mehr oder weniger größeren Temperaturbereich. Zunächst schmelzen die kleineren oder weniger regelmäßig aufgebauten Kristalle. Mit zunehmender Temperatur schmelzen dann immer dickere und größere Kristallite, bis die gesamte Probe aufgeschmolzen ist. Die Schmelzenthalpie (notwendige Energie zum Aufschmelzen der Kristalle) kann mit Hilfe der Dynamische Differenzkalorimetrie (DSC) gemessen werden.

Teilkristalline Polymere (auch als teilkristalline Kunststoffe bezeichnet) besitzen sowohl eine Glasübergangstemperatur $T_G$, unterhalb derer die amorphe Phase einfriert, als auch eine Schmelztemperatur, bei der sich die kristalline Phase auflöst. Die Schmelztemperatur trennt den entropieelastischen Bereich deutlich vom Fließbereich ab. Amorphe Polymere (auch als amorphe Kunststoffe bezeichnet) weisen im Gegensatz dazu nur eine Schmelztemperatur auf, die durch die Glasübergangstemperatur bestimmt ist. Handelsübliche teilkristalline Kunststoffe besitzen üblicherweise einen kristallinen Anteil von 20 % bis 80 %.

Der Fachmann kann ohne weiteres den Kristallit-Schmelzbereich von dem Glasübergangsbereich eines amorphen Polymers unterscheiden. In der Regel liegt bei einem teilkristallinen Polymer ein Glasübergangsbereich unterhalb der Kristallitschmelztemperatur, oft auch unterhalb der Raumtemperatur, vor.

Bei dem zumindest einen erfindungsgemäß gewählten kristallisierbaren Polymer handelt es sich dementsprechend, wie eingehend definiert, um ein Polymer, welches in reinem Zustand in der ersten Aufheizkurve nach definierter Lagerung - mindestens 1 Monat bei Umgebungsbedingungen - der DSC-Messung bei einer Aufheizrate von 10 K/min eine Kristallit-Schmelzenthalpie von mindestens 15 J/g aufweist.

In der Regel sind die definierten Lagerbedingungen bei der Anlieferung eines kommerziell erhältlichen Polymers vom Hersteller bereits erfüllt.

Wie eingangs definiert weist das zumindest eine erfindungsgemäß gewählte kristallisierbare Polymer beim definierten Abkühlen (ausgehend von einer Temperatur von mindestens 30 K oberhalb der Peaktemperatur des Schmelzpeaks beziehungsweise von mindestens 100 °C, je nachdem welcher Wert höher liegt, bei einer Abkühlrate von 10 K/min) in der dynamischen Differenzkalorimetrie (DSC) eine Kristallisationsenthalpie von weniger als 1 J/g auf. Diese Kristallisationsenthalpie tritt als exothermer Enthalpiepeak in der Abkühlkurve auf.

Entsprechend geringe Enthalpiewerte von weniger als 1 J/g bei der angegebenen Abkühlrate stehen dabei für sehr geringe Kristallisationsgeschwindigkeiten.

Eine Ausbildung der Kristallite erfolgt dann wieder in einer hinreichenden Lagerung bei den oben genannten Umgebungsbedingungen (vgl. dort).

Weiter bevorzugt weist das zumindest eine erfindungsgemäß gewählte kristallisierbare Polymer nach einem Abkühlen wie vorstehend beschrieben (ausgehend von einer Temperatur von mindestens 30 K oberhalb der Peaktemperatur des Schmelzpeaks beziehungsweise von mindestens 100 °C, je nachdem welcher Wert höher liegt, bei einer Abkühlrate von 10 K/min) in der DSC-Messung einer sofort anschließenden zweiten Aufheizkurve bei einer Aufheizrate von 10 K/min eine Kristallisationsenthalpie von weniger als 35 J/g, besonders bevorzugt weniger als 10 J/g, auf.

Durch die vorgegebene Abkühlgeschwindigkeit in der ersten Abkühlkurve kommt es vor, dass in der Abkühlkurve nur eine sehr geringe oder keine Kristallisationsenthalpie gemessen wird - die Kristallisationsgeschwindigkeit also derart langsam ist, dass sehr wenige beziehungsweise quasi keine nennenswerten Kristallite gebildet werden können, man spricht von einer "abgeschreckten Schmelze" -, dass aber dennoch eine (Nach-) Kristallisation in der zweiten Aufheizkurve nach Wieder-Überschreiten des Glasübergangspunktes $T_G$ erfolgt. Diese sogenannte Kaltkristallisation ist dann als exothermer Kristallisationspeak in der Aufheizkurve zu detektieren.

Solche Polymere sind in ihrer Kristallisationsgeschwindigkeit insgesamt zwar auch als langsam einzustufen, aber oberhalb derer einzuordnen, welche auch in der zweiten Aufheizkurve keine Kristallisationsenthalpie zeigen. Vorteilhaft sind daher Polymere mit einer "Kaltkristallisationsenthalpie" von weniger als 35 J/g, besonders bevorzugt weniger als 10 J/g, wie oben erwähnt. Ganz besonders bevorzugt sind als Matrixpolymere, die in einer zweiten Aufheizkurve (bei einer Aufheizrate von 10 K/min), nach einem vorhergehenden Abkühlvorgang wie vorstehend beschrieben (ausgehend von einer Temperatur von mindestens 30 K oberhalb der Peaktemperatur des Schmelzpeaks beziehungsweise von mindestens 100 °C, je nachdem welcher Wert höher liegt, bei einer Abkühlrate von 10 K/min) in der DSC-Messung keine Kristallisationsenthalpie aufweisen, also keine Kaltkristallisation zeigen.

Vorzugsweise weist das zumindest eine erfindungsgemäß gewählte kristallisierbare Polymer in reinem Zustand nach einem Abkühlen wie vorstehend beschrieben (ausgehend von einer Temperatur von mindestens 30 K oberhalb der Peaktemperatur des Schmelzpeaks beziehungsweise von mindestens 100 °C, je nachdem welcher Wert höher liegt, bei einer Abkühlrate von 10 K/min) beim Wiederaufheizen einen Kristallitschmelzbereich im Bereich von 30 bis 150 °C auf.

Sofern mehrere erfindungsgemäß gewählte kristallisierbare Polymere in der polymeren Filmbildner-Matrix zugegen sind, gelten die vorstehenden Spezifizierungen in einer bevorzugten Vorgehensweise für alle diese erfindungsgemäß gewählten kristallisierbaren Polymere.

Erfindungsgemäß sehr bevorzugt ist das zumindest eine erfindungsgemäß gewählte kristallisierbare Polymer beziehungsweise sind die mehreren erfindungsgemäß gewählten kristallisierbaren Polymere jeweils für sich ausgewählt aus

(i) Polyurethanen, welche bevorzugt von Polyesterdiolen abgeleitete Einheiten aufweisen
(ii) Polyestern,
(iii) Copolyestern,
(iv) Copolyamiden.

Die Filmbildner-Matrix ist dabei in einer vorteilhaften Ausführung der Erfindung aus solchen Polymeren gebildet, die selbst keine reaktiven Gruppen aufweisen, die an der mittels der Reaktivkomponente(n) bewirkten Härtungsreaktion teilnehmen. Insbesondere ist die polymere Filmbildner-Matrix dann inert gegenüber einer solchen Härtungsreaktion. Inert bedeutet in diesem Zusammenhang, dass die Reaktivkomponente(n) unter geeignet gewählten Bedingungen (z. B. bei ausreichend geringen Temperaturen) im Wesentlichen nicht mit der polymeren Filmbildner-Matrix reagieren.

Inerte Filmbildner-Matrix-Polymere weisen entweder keinerlei funktionelle Gruppen auf, oder sie umfassen ausschließlich solche funktionellen Gruppen - gegebenenfalls auch aus der im nachfolgenden Absatz genannten Auflistung -, die mit dem gewählten Reaktivsystem unter den gewählten Härtungsbedingungen nicht zur Reaktion kommen.

In einer weiteren vorteilhaften Ausführung enthält die polymere Filmbildner-Matrix selbst in einem geringen Umfang reaktive Gruppen wie zum Beispiel Epoxid-, Hydroxy-, Amino-, Acrylat-, Methacrylat-, Thiol-, Isocyanat-, Vinyl-, Anhydrid- oder Carboxylgruppen, insbesondere bevorzugt derart, dass bis zu maximal 15 Gew.-% der zum Aufbau eines Filmbildner-Matrix-Polymers verwendeten Monomere eine oder mehrere solcher funktionellen Gruppen aufweisen. Je nach Wahl der Reaktivkomponente(n) und der übrigen Bestandteile des Reaktivsystems und der angewendeten Härtungsbedingungen kann es dann dazu kommen, dass die Matrixpolymere in entsprechend geringem Maße an der Härtungsreaktion teilnehmen und in ein entsprechendes Polymernetzwerk - schwach - eingebunden werden. Solche Matrixpolymere sind aufgrund ihrer geringen Funktionalität jedoch nicht zu den Reaktivkomponente(n) zu zählen.

Wie eingangs beschrieben kann die polymere Filmbildner-Matrix auch ein oder mehrere weitere nicht erfindungsgemäß gewählte Polymere enthalten, die nicht ein kristallisierbares Polymer sind. Sofern solche nicht erfindungsgemäß gewählten Polymere vorhanden sind, beträgt der Anteil der erfindungsgemäß gewählten Polymere an der polymeren Filmbildner-Matrix zumindest 50 Gew.-% , vorteilhaft zumindest 75 Gew.-%, besonders vorteilhaft zumindest 90 Gew.-%.

**Reaktivkomponenten (b)**

Als Reaktivkomponente können grundsätzlich alle in einer Aufbaureaktion vernetzenden, Makromoleküle bildenden reaktiven Konstituenten verwendet werden, wie sie nach allgemeinem Fachwissen im Bereich der Haftklebemassen oder Reaktivklebstoffe zur Verfügung stehen und wie sie insbesondere im einschlägigen Stand der Technik - siehe einführenden Abschnitt dieser Schrift - für Reaktivklebebänder, insbesondere auch für Zweikomponenten-Filmsysteme, beschrieben sind. Ein weiterer guter Überblick hierzu findet sich beispielweise in "Gerd Habenicht: Kleben - Grundlagen, Technologien, Anwendungen, 6. Auflage, Springer, 2009".

Dies sind beispielhaft Konstituenten, die Epoxide, Polyester, Polyether, Polyurethane, Phenolharz-, Kresol oder Novolak basierte Polymere, Polysulfide oder Acrylpolymere (Acryl, Methacryl) bilden. Beispielhaft tragen Reaktivkomponenten Epoxid-, Hydroxy-, Amino-, Acrylat-, Methacrylat-, Thiol-, Isocyanat-, Vinyl- oder Carboxylgruppen.

Die eine oder die mehreren Reaktivkomponenten sind jeweils für sich bevorzugt ausgewählt aus solchen, die Epoxid-, Hydroxy, Acrylat, Methacrylat-, oder Isocyanatgruppen tragen.

Sofern die Reaktivkomponente (b) mehrere Reaktivverbindungen umfasst, können diese bevorzugt dieselbe reaktive Gruppe aufweisen. Aber es ist auch möglich, mehrere Verbindungen als Reaktivkomponente (b) zu kombinieren, die unterschiedliche reaktive Gruppen aufweisen, insbesondere etwa gewählt aus den vorgenannten Gruppen.

Reaktivkomponenten umfassen auch Oligomere, die reaktive Gruppen tragen. Als Oligomer wird ein Polymer mit wenigen Monomereinheiten bezeichnet, bei dem eine kleine Änderung der Zahl der Einheiten schon eine deutliche Änderung der Eigenschaften bewirkt. Insbesondere werden als Oligomere im Sinne der vorliegenden Schrift solche Makromoleküle bezeichnet, deren gewichtsmittleres Molekulargewicht kleiner als 5000 g/mol ist. Oligomere sind daher im System beweglicher als die längerkettigen Polymere und nicht als Filmbildner geeignet.

(b-I) Reaktive Komponenten auf Acrylatbasis

Besonders bevorzugt werden einfach- oder mehrfunktionelle (Meth)Acrylate, da diese mit den bevorzugten polymeren Filmbildnern gut verträglich sind. Besonders bevorzugt sind die einfach- oder mehrfunktionellen (Meth)Acrylate ausgewählt aus der Gruppe zyklische aliphatische oder aromatische oder heterozyklische Einheiten umfassenden (Meth)Acrylate, da diese gute Adhäsionseigenschaften aufweisen.

Wie hierin verwendet, soll das die Reaktivkomponente (b) für ein Monomer stehen, das insbesondere zu einer Radikalkettenpolymerisation in der Lage ist. Weitere bevorzugte reaktive Komponenten auf Acrylatbasis sind in den oben aufgeführten Schriften zum Stand der Technik genannt.

Insbesondere bevorzugt sind reaktive Komponenten, z.B. auf Acrylatbasis, mit geringer Verdampfungsrate, da dadurch ein Monomerverlust des reaktiven Haftklebebands bei der Lagerung reduziert wird. Dabei sind die reaktiven Komponenten mit geringer Verdampfungsrate zumindest zu 50 Gew.-% im gesamten Anteil der Reaktivkomponente (b) enthalten.

Das Niveau der Verdampfungsrate kann anhaltsweise aus den in der Literatur genannten Verdampfungsenthalpien und dem Molekulargewicht abgeschätzt werden, so dass eine Vorauswahl getroffen werden kann. Erfindungsgemäß wird die Verdampfungsrate durch Lagerung eines einseitig mit einem 50 μm dicken Polyesterliner abgedeckten, 100 μm dicken Films bestehend aus 80 Gew-% Desmomelt 530 und 20 Gew.-% der zu untersuchenden Reaktivkomponente bei 40 °C in einem handelsüblichen abgesaugten Trockenschrank ermittelt. Durch Vermischung der Reaktivkomponente mit einer üblichen polymeren Filmbildner-Matrix (hier Desmomelt 530) werden Wechselwirkungen mit dem

Polymer und Diffusionsprozesse berücksichtigt.
Der Film wird wie unten angegeben hergestellt. Gemessen wird der Gewichtsverlust des Films ohne Liner $\Delta m = m_0 - m$ nach 10 Tagen Lagerung. Die Verdampfungsrate $\dot{m}_V$ ergibt sich zu $\dot{m}_V = \frac{\Delta m}{0{,}2 \times m_0}$. Sie wird in %/10d angegeben.
Bevorzugt weist die reaktive Komponente eine Verdampfungsrate von weniger als 60 % / 10 d, besonders bevorzugt von weniger als 30 % / 10 d auf.

Neben den erfindungsgemäß ausgewählten Monomeren können die erfindungsgemäßen reaktiven Klebstofffilme weitere reaktive Monomere enthalten. Dies können beispielsweise weitere Acrylmonomere sein oder Vinylverbindungen, insbesondere stickstoffhaltige Vinylverbindungen und/oder andere monomere, oligomere oder polymere Verbindungen mit Kohlenstoff-Kohlenstoff-Doppelbindung(en).

(b-II) Epoxidgruppenhaltige reaktive Komponenten

Als Epoxidgruppen-haltige Verbindungen für die Reaktivkomponente (b) können vorteilhaft organische Verbindungen mit wenigstens einem Oxiranring eingesetzt werden, die durch eine Ringöffnungsreaktion polymerisierbar sind. Solche Materialien, die allgemein als Epoxide bezeichnet werden, umfassen sowohl monomere als auch polymere Epoxide und können aliphatisch, cycloaliphatisch oder aromatisch sein. Diese Materialien weisen im Allgemeinen im Durchschnitt wenigstens zwei Epoxidgruppen pro Molekül, vorzugsweise mehr als zwei Epoxidgruppen pro Molekül, auf. Die "durchschnittliche" Anzahl an Epoxidgruppen pro Molekül wird als die Anzahl an Epoxidgruppen in dem epoxidhaltigen Material dividiert durch die Gesamtanzahl an vorliegenden Epoxidmolekülen definiert.
Alternativ oder zusätzlich zu den Verbindungen mit einem Oxiranring können auch Oxetane, also 4-gliedrige Ringverbindungen, verwendet werden.

Vorteilhaft einsetzbare polymere Epoxide umfassen lineare Polymere mit endständigen Epoxidgruppen (z. B. ein Diglycidylether eines Polyoxyalkylenglycols), Polymere mit Gerüstoxiraneinheiten (z. B. Polybutadien-Polyepoxid) und Polymere mit Epoxidseitengruppen (z. B. ein Glycidylmethacrylatpolymer oder-copolymer). Das Molekulargewicht des epoxidhaltigen Materials kann von 58 bis etwa 100.000 g/mol oder mehr variieren. Mischungen aus verschiedenen epoxidhaltigen Materialien können ebenfalls verwendet werden. Nützliche epoxidhaltige Materialien umfassen jene, die Cyclohexenoxidgruppen, wie die Epoxycyclohexancarboxylate, die durch 3,4-Epoxycyclohexylmethyl-3,4-epoxycyclohexancarboxylat, 3,4-Epoxy-2-methylcyclohexyl-methyl-3,4-epoxy-2-methylcyclohexancarboxylat und Bis(3,4-epoxy-6-methylcyclo-hexylmethyl)adipat exemplifiziert sind, enthalten. Für eine detailliertere Liste von nützlichen Epoxiden dieser Art kann auf U.S. Patent Nr. 3,117,099 verwiesen werden.

Weitere epoxidhaltige Materialien, die bei der Anwendung dieser Erfindung besonders nützlich sind, umfassen Glycidylethermonomere. Beispiele sind die Glycidylether von mehrwertigen Phenolen, die durch Reaktion eines mehrwertigen Phenols mit einem Überschuss an Chlorhydrin, wie Epichlorhydrin (z. B. der Diglycidylether von 2,2-Bis-(2,3-epoxypropoxyphenol)propan), erhalten werden. Weitere Beispiele von Epoxiden dieses Typs, die bei der Anwendung dieser Erfindung verwendet werden können, sind in U.S. Patent Nr. 3,018,262 beschrieben.

Es gibt eine Vielzahl an im Handel erhältlichen epoxidhaltigen Materialien, die in dieser Erfindung verwendet werden können. Insbesondere geeignet sind Epoxide, die leicht erhältlich sind, wie Octadecylenoxid, Epichlorhydrin, Styroloxid, Vinylcyclohexenoxid, Glycidol, Glycidylmethacrylat, Diglycidylether von Bisphenol A (z. B. jene, die unter den Handelsbezeichnungen EPON 828, EPON 1004 und EPON 1001F von Shell Chemical Co. und DER-332 und DER-334 von Dow Chemical Co. erhältlich sind), Diglycidylether von Bisphenol F (z. B. ARALDITE GY281 von Ciba-Geigy), Vinylcyclohexendioxid (z. B. ERL 4206 von Union Carbide Corp.), 3,4-Ep-oxycyclohexylmethyl-3,4-epoxycyclohexencarboxylat (z. B. ERL-4221 von Union Carbide Corp.), 2-(3,4-Epo-xycyclohexyl-5,5-spiro-3,4-epoxy)cyclohexan-metadioxan (z. B. ERL-4234 von Union Carbide Corp.), Bis(3,4-epoxycyclohexyl)adipat (z. B. ERL-4299 von Union Carbide Corp.), Dipentendioxid (z. B. ERL-4269 von Union Carbide Corp.), epoxidiertes Polybutadien (z. B. OXIRON 2001 von FMC Corp.), silikonharzhaltige Epoxidfunktionalität, Epoxysilane (z. B. beta-(3,4-Epoxycyclohexyl)ethyltrimethoxysilan und gamma-Glycido-xypropyltrimethoxysilan, im Handel erhältlich von Union Carbide), feuerhemmende Epoxidharze (z. B. DER-542, ein bromiertes bisphenolartiges Epoxidharz, erhältlich von Dow Chemical Co.), 1,4-Butandioldiglycidylether (z. B. ARALDITE RD-2 von Ciba-Geigy), hydrierte, auf Bisphenol A-Epichlorhydrin basierende Epoxidharze (z. B. EPONEX 1510 von Shell Chemical Co.) und Polyglycidylether von Phenolformaldehyd-Novolak (z. B. DEN-431 und DEN-438 von Dow Chemical Co.).

In weiterer Ausgestaltung des erfindungsgemäßen Klebebandes enthält die epoxidgruppenhaltige Reaktivkomponente (b-II) mindestens 10 Gew.-% an bei 25 °C flüssigen Epoxid-Harzen, bezogen auf die epoxidgruppenhaltige Reaktivkomponente (b-II). Der Anteil solcher flüssiger Epoxid-Harze an der epoxidgruppenhaltige Reaktivkomponente (b-II) liegt insbesondere bei 10 bis 90 Gew.-%, weiter bevorzugt bei 20 bis 75 Gew.-%. Klebebänder mit solchen Verhältnissen aus flüssigen und festen Epoxid-Komponenten zeigen im unausgehärteten Zustand besonders ausgewogene

Klebeigenschaften. Wird ein Klebeband mit besonders guten Auffließeigenschaften gewünscht, so ist der Anteil an flüssigen Epoxidkomponenten bevorzugt 50 bis 80 Gew.-%. Für Anwendungen, bei denen die Klebebänder bereits im unausgehärteten Zustand eine höhere Last tragen müssen, ist ein Anteil von 15 bis 45 Gew.-% besonders bevorzugt. Es kann ein solches Harz oder auch eine Mischung verschiedener Harze eingesetzt werden.

Ein Maß für die Fließfähigkeit ist die dynamische Viskosität. Die dynamische Viskosität wird vorliegend in einem Zylinderrotationsviskosimeter mit einer Standardgeometrie nach DIN 53019-1 (2008-09) bestimmt. Die Viskosität wird bei einer Messtemperatur von 25 °C und einer Schergeschwindigkeit 1 $xs^{-1}$ gemessen. Als Fluid wird eine Substanz mit einer Viskosität von weniger als 500 Pa·s bezeichnet.

Weiterhin kann die epoxidgruppenhaltige Reaktivkomponente (b-II) vorteilhaft Epoxidcyclohexyl-basierte Epoxid-Harze enthalten, wobei sich Anteile von 5 bis 80 Gew.-% als vorteilhaft erwiesen haben, weiter bevorzugt von 15 bis 60 Gew.-%, jeweils bezogen auf die gesamte Reaktivkomponente (b). Der Einsatz flüssiger Epoxycyclohexyl-basierter Harze wirkt sich vorteilhaft auf die klebtechnischen Eigenschaften der Klebemassen im unausgehärteten Zustand insbesondere dann aus, wenn hiervon 10 bis 40 Gew.-% eingesetzt werden. Werden Anteile von 50 bis 80 Gew.-% verwendet, so lassen sich über die hohe Reaktivität der Epoxycyclohexyl-Derivate in Kombination mit der erfindungsgemäßen Komponente A schnell härtende Haftklebstoffe mit realisieren.

Das Epoxidcyclohexyl-basierte Epoxid-Harz kann beispielsweise ausgewählt sein aus der Gruppe umfassend oder bestehend aus 3,4-Epoxycyclohexylmethyl-3,4-epoxycyclohexancarboxylat, 3,4-Epoxy-2-methylcyclohexylmethyl-3,4-epoxy-2-methylcyclo-hexancarboxylat und Bis(3,4-epoxy-6-methylcyclohexylme-thyl)adipat, Bis ((3,4-Epoxycyclohexyl)methyl)adipat Dicyclopentadien Dioxid, sowie Kombinationen hiervon. Diese Verbindungen sind wegen ihrer hohen Reaktivität vorteilhaft. Häufig sind diese Verbindungen flüssig, was für hohe Anteile an Komponente B zu sehr weichen Klebebändern führt. Werden festere Klebebänder gewünscht, kann dies durch die Verwendung von Polymeren mit Epoxycyclohexylgruppen erreicht werden, die beispielsweise über eine radikalische Polymerisation von 3,4-Epoxycyclohexylmethyl Methacrylat gegebenenfalls mit Comonomeren erhältlich sind.

Die epoxidgruppenhaltige Reaktivkomponente (b-II) kann eine mittlere Funktionalität bezogen auf die Alkylenoxid-Gruppen von wenigstens 1,0 bis 6,0 aufweisen, insbesondere von 1,75 bis 3,2, um eine hohe Verklebungsfestigkeit zu erreichen. Die Netzwerkdichte kann über reaktive Verdünner reduziert werden, was zu weniger brüchigen Klebmassen, insbesondere bei hohen Anteilen an Komponente B, führt. Solche reaktiven Verdünner haben typischerweise eine Funktionalität von 1,0.

Die Netzwerkdichte kann über Art und Zusammensetzung der Reaktivkomponente (b) gezielt beeinflusst werden. Die Verwendung höhermolekularer Epoxide - wie beispielsweise von festen Bisphenol-A-Diglycidylethern - reduziert in der Regel die Netzwerkdichte. Bevorzugt kommen dann Epoxidharze mit einem Epoxidäquivalent von mehr als 400 g/ eq, insbesondere von mehr als 800 g/eq zum Einsatz.

Das Epoxyäquivalent bzw. die Äquivalentmasse (EEW für Epoxy-Equivalent-Weight) gibt die Menge an Epoxidharz in [g] an, die ein Äquivalent [eq] Epoxidfunktionen besitzt. Sie errechnet sich aus der Molmasse in [g/mol] dividiert durch die Funktionalität f in [eq/Mol]:

$$EEW\,[g/eq] = M\,[g/Mol] \,/\, f\,[eq/Mol]$$

Alternative Konzentrationsangaben erfolgen in [m eq/kg] (manchmal fälschlicherweise auch als [mmol/kg] beschrieben) und in [%]. Eine Epoxidgruppe, d.h. 1 eq ($C_2H_3O$) entspricht 43 g, d.h. 1.000 m eq/kg Epoxid entsprechen 43 g Epoxid/kg, und das sind dementsprechend 4,3 %. Das Epoxyäquivalent wird von Rohstoffherstellern angegeben und nach ISO 3001:1999 ermittelt.

Nach einer bevorzugten Ausführungsform des erfindungsgemäßen Klebstofffilms enthält die epoxidgruppenhaltige Reaktivkomponente (b-II) B wenigstens zwei unterschiedliche Epoxid-Harze B1 und B2, von denen

a. das erste Epoxidharz B1 bei 25 °C eine dynamische Viskosität von weniger als 500 Pa*s aufweist, gemessen nach DIN 53019-1 bei einer Messtemperatur von 25 °C und einer Schergeschwindigkeit 1 x $s^{-1}$, und

b. von denen das zweite Epoxidharz B2 eine Erweichungstemperatur von wenigstens 45 °C oder bei 25 °C eine dynamische Viskosität von wenigstens 1000 Pa*s aufweist, gemessen nach DIN 53019-1 bei einer Messtemperatur von 25 °C und einer Schergeschwindigkeit 1 x $s^{-1}$,

wobei insbesondere der Anteil des ersten Epoxidharzes B1 10 bis 90 Gew.-%, bevorzugt 20 bis 75 Gew.-% und der Anteil des zweiten Epoxidharzes B2 10 bis 90 Gew.-%, bevorzugt 25 bis 80 Gew.-% beträgt, bezogen auf die Reaktivkomponente (b).

Reagenzien (c)

Die Reagenzien (c) sind ausgewählt aus einem Initiator, insbesondere Radikalinitiator, oder einem Aktivator oder einem Härter (letzterer insbesondere für Epoxidsysteme). Grundsätzlich können auch hier alle Reagenzien gewählt werden, die aus dem einschlägigen Stand der Technik für die Reaktivkomponenten (b) als Initiatoren, Aktivatoren beziehungsweise Härter bekannt sind. Auch hier wird insbesondere auf den im einführenden Teil dieser Schrift zitierten Stand der Technik verwiesen.

Nachfolgend werden einige jeweils für sich vorteilhafte Initiatoren, Aktivatoren sowie Initiator/Härter für Epoxidsysteme beschrieben.

(c-I) Initiatoren

Wie hierin verwendet, steht der Begriff Initiator, insbesondere Radikalinitiator bzw. radikalbildende Substanz (oder auch Härter), für eine Verbindung, die eine Polymerisationsreaktion oder Vernetzung des Klebstoffs einleiten kann. Der Initiator, insbesondere Radikalinitiator, nimmt allerdings zu einem sehr geringen Anteil am Reaktionsgeschehen teil und bildet folglich keinen die Eigenschaften der Verklebung bestimmenden Polymeranteil.

In der vorliegenden Erfindung wird dem erfindungsgemäßen reaktiven Haftklebstofffilm, etwa beispielweise einem solchen mit einer Reaktivkomponenente auf Acrylatbasis, ein Initiator, insbesondere Radikalinitiator, zugesetzt.

Bevorzugt werden Radikalinitiatoren. Es können alle im Stand der Technik bekannten Radikalinitiatoren eingesetzt werden. Bevorzugte Radikalinitiatoren sind Peroxide, Hydroperoxide und Azoverbindungen.

In einer besonders bevorzugten, erfindungsgemäßen Ausführungsform ist der Radikalinitiator ein organisches Peroxid. Besonders bevorzugt sind Hydroperoxide, insbesondere Diisopropylbenzol-hydroperoxid (CAS-Nr. 26762-93-6). Diisopropylbenzol-hydroperoxid wird bevorzugt in Form einer 50 gew.%igen Lösung von Diisopropylhydroperoxid in Diisopropylbenzol, erhältlich unter dem Handelsnamen Peroxan® IHP-50 von der Firma Pergan GmbH in 46395 Bocholt, Deutschland, eingesetzt. $\alpha,\alpha$- Dimethylbenzylhydroperoxid, das auch als Cumolhydroperoxid (CAS-Nr. 80-15-9) bekannt ist, kann ebenfalls verwendet werden. Weiterhin können zum Beispiel auch p-Menthanhydroperoxid (CAS-Nr. 26762-92-5), tert.-Amyl-hydroperoxid (CAS-Nr. 3425-61-4) oder 1,1,3,3-Tetramethylbutyl-hydroperoxid (CAS-Nr. 5809-08-5) verwendet werden.

Die Menge des Radikalinitiators liegt erfindungsgemäß im Bereich von etwa 0,1 bis 20 Gew.%, bevorzugt etwa 1 bis 5 Gew.%, bezogen auf die Gesamtmischung der Bestandteile des mindestens einen ersten erfindungsgemäßen reaktiven Klebstofffilms. Am stärksten bevorzugt werden etwa 6 bis 12 Gew.% Radikalinitiator, bezogen auf die Gesamtmischung der Bestandteile des mindestens einen ersten erfindungsgemäßen reaktiven Klebstofffilms, eingesetzt. Die Gesamtmischung der Bestandteile des mindestens einen ersten erfindungsgemäßen reaktiven Klebstofffilms steht hier für die gesamte Menge der eingesetzten polymeren Filmbildner-Matrix (a), der reaktiven Komponenten (b), des Reagens (c) sowie weiterer optional vorliegender Komponenten, die als Summe (in Gew.%) erhalten wird.

(c-II) Aktivatoren

In der vorliegenden Erfindung wird dem erfindungsgemäßen reaktiven Haftklebstofffilm, bevorzugt statt oder zusätzlich zum Initiator, ein oder mehrere Aktivatoren zugesetzt.

Geeignete Aktivatoren zur Verwendung in der vorliegenden Erfindung, wenn ein radikalisch polymerisierbares System - etwa beispielsweise ein Reaktivsystem auf Acrylatbasis - aktiviert werden soll, sind beispielsweise ausgewählt aus der Gruppe, bestehend aus einem Dihydropyridin-Derivat oder einem Übergangsmetallkomplex, insbesondere einem Übergangsmetall-Phthalocyanin-Komplex.

In einer erfindungsgemäßen Ausführungsform ist der Aktivator 3,5-Diethyl-1,2-dihydro-1-phenyl-2-propylpyridin (auch PDHP genannt, CAS-Nr. 34562-31-7).

In einer bevorzugten erfindungsgemäßen Ausführungsform wird eine Komplexverbindung mit einem Eisen-, Mangan-, oder Kobalt-Kation als Zentralatom und einem Phthaloycyanin-Anion als Liganden eingesetzt. Das Eisen-, Mangan-, oder Kobalt-Kation ist in der Komplexverbindung zweifach positiv geladen, während das Phthaloycyanin-Anion zweifach negativ geladen ist. Das Eisen-, Mangan-, oder Kobalt-Kation ersetzt in der Komplexverbindung jeweils zwei Wasserstoff-Atome, die der Ligand vor der Umsetzung zur Komplexverbindung an den Stickstoff-Atomen getragen hat.

Die Phthalocyanin-Liganden können gegebenenfalls Substituenten anstelle der an die KohlenstoffAtome gebundenen H-Atome tragen. In diesem Fall spricht man von Derivaten dieser Verbindungen. Geeignete Substituenten sind ausgewählt aus der Gruppe, bestehend aus Fluor, Chlor, Brom, Iod, Methyl, Ethyl, Propyl, Isopropyl, Butyl, tert.-Butyl, -OH, $-NH_2$, $-NO_2$.

Ein besonders geeigneter Aktivator umfasst Eisen(II)-phthalocyanin (CAS-Nr. 132-16-1), Mangan(II)-phthalocyanin (CAS-Nr. 14325-24-7), oder Kobalt(II)-phthalocyanin (CAS-Nr. 3317-67-7). Am bevorzugtesten wird Eisen(II)-phthalocyanin (CAS-Nr. 132-16-1), erhältlich von der Firma Chemos GmbH in 93128 Regenstauf, Deutschland,

als Aktivator eingesetzt.

Als Aktivatoren können ebenfalls vorteilhaft ein oder mehrere Photoredox-Katalysatoren eingesetzt werden. In der vorliegenden Schrift steht der Begriff Photoredox-Katalysator für eine (UV)-lichtempfindliche Verbindung, die, wenn sie durch (UV)-Licht angeregt wird, den Transfer von Elektronen zwischen chemischen Verbindungen vermitteln kann, die sonst langsamer oder gar nicht reagieren würden. Im Gegensatz zu einem Photoinitiator zerfällt ein Photoredox-Katalysator bei Bestrahlung mit (UV)-Licht nicht in reaktive Spaltprodukte, sondern wird lediglich in einen angeregten Zustand versetzt, der in der Regel relativ langlebig ist und aus dem heraus Redox-Prozesse initiiert oder vermittelt werden können.

Geeignete Photoredox-Katalysatoren zur Verwendung in der vorliegenden Erfindung, wenn ein radikalisch polymerisierbares System aktiviert werden soll, sind ausgewählt wie vorstehend beschrieben, dabei insbesondere entsprechend der allgemeinen Formeln (I) oder (II).

In einer bevorzugten erfindungsgemäßen Ausführungsform ist der Photoredox-Katalysator ein Übergangsmetallkomplex mit Ruthenium als Zentralatom und Bipyridin oder einem einfach oder mehrfach substituierten Bipyridin-Derivat als Liganden. In einer weiteren bevorzugten erfindungsgemäßen Ausführungsform ist der Photoredox-Katalysator ein Übergangsmetallkomplex mit Iridium als Zentralatom und Phenylpyridin oder einem einfach oder mehrfach substituierten Phenylpyridin-Derivat als Liganden.

In einer besonders bevorzugten erfindungsgemäßen Ausführungsform ist der Photoredox-Katalysator ausgewählt aus:

i. [Tris(2,2'-bipyridyl)ruthenium(II)]$^{2+}$ , [Ru(bpy)$_{3]}$$^{2+}$ - Formel (Ia):

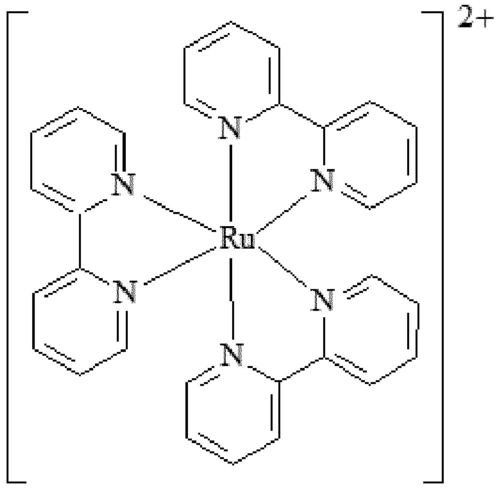

ii. Tris[2-(2,4-difluorophenyl)pyridin]iridium(III), **Ir(Fppy)$_3$;** CAS-Nr.: 387859-70-3 - Formel (Ib):

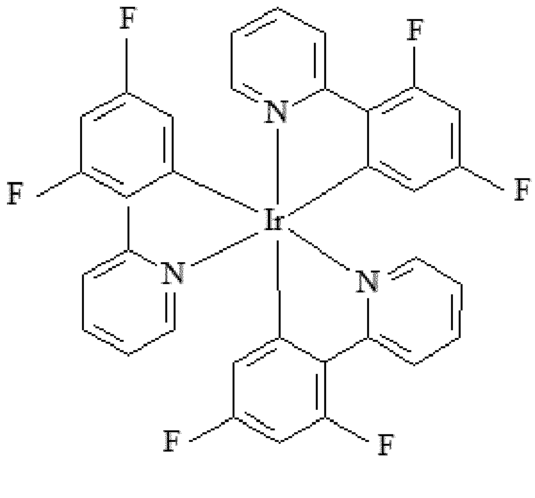

iii. Tris(2-phenylpyridinato)iridium(III), Ir(ppy)$_3$; CAS-Nr.: 94928-86-6 - Formel (Ic):

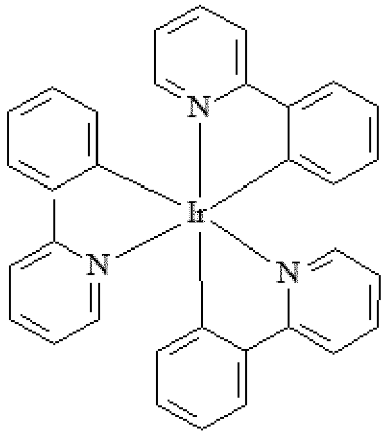

Das bevorzugte Gegenion des Kations der Formel (Ia) ist Chlorid. Das entsprechende kommerziell verfügbare Produkt enthält Kristallwasser. Die besonders bevorzugte Ausführungsform des Photoredox-Katalysators der Formel (Ia) ist somit Tris(2,2'-bipyridyl)ruthenium(II) chlorid hexahydrat, (CAS-Nr.: 50525-27-4), erhältlich bei CHEMOS GmbH & Co. KG (http://www.chemos.de), ebenso wie der Photoredox-Katalysatoren der Formel (Ic).
Der Photoredox-Katalysator mit der Formel (Ib) ist erhältlich bei Strem Chemicals, Inc. (http://www.strem.com) .

Als Beispiele für erfindungsgemäß vorteilhaft geeignete Photoredox-Katalysatoren der Formeln (I) oder (II) seien weiterhin genannt tris-(2,2'-Bipyrimidin)ruthenium2+ (Ru(bpm)32+); tris-(2,2'-Bipyrazin)ruthenium2+ (Ru(bpz)32+); tris-(1,10-Phenanthrolin)ruthenium2+ (Ru(phen)32+); bis-(2-(2',4'-Difluorophenyl)-5-trifluoromethylpyridin)(ditert-butylbipyridin) iridium+ (Ir(dF(CF3)ppy)2(dtbbpy)+); bis-(2-phenylpyridin)(ditert-butylbipyridin)iridium+ (Ir(ppy)2(dtbbpy)+).

Die Menge des Aktivators liegt erfindungsgemäß im Bereich von größer 0 bis etwa 10 Gew.%, bevorzugt etwa 0,1-5,0 Gew.%, bezogen auf die Gesamtmischung der Bestandteile des erfindungsgemäßen reaktiven Haftklebstofffilms. Am stärksten bevorzugt werden etwa 0,2-3,0 Gew.%, noch bevorzugter 0,5-2,0 Gew.% Aktivator, bezogen auf die Gesamtmischung der Bestandteile des mindestens einen zweiten erfindungsgemäßen reaktiven Klebstofffilms eingesetzt. Für bestimmte Aktivatoren können die bevorzugten Bereiche auch von den genannten abweichen.

Die Gesamtmischung der Bestandteile des erfindungsgemäßen reaktiven Haftklebstofffilms steht hier für die gesamte Menge der eingesetzten polymeren Filmbildner-Matrix (a), der reaktiven Monomere (b), des Reagens (c) sowie weiterer optional vorliegender Komponenten, die als Summe (in Gew.%) erhalten wird.

(c-IIa) Initiatoren für kationisch härtende Epoxidsysteme

Die kationische Härtung von Epoxidsystemen kann durch Photoinitiatoren gestartet werden. Unter den Photoinitiatoren für eine kationische UV-induzierte Härtung sind insbesondere Sulfonium, Iodonium und Metallocen basierende Systeme einsetzbar. Als Beispiele für Sulfonium basierende Kationen sei auf die Ausführungen in US 6,908,722 B1 (insbesondere Spalten 10 bis 21) verwiesen.

Als Beispiele für Anionen, die als Gegenionen für die oben genannten Kationen dienen, seien Tetrafluoroborat, Tetraphenylborat, Hexafluorophosphat, Perchlorat, Tetrachloroferrat, Hexafluoroarsenat, Hexafluoroantimonat, Pentafluorohydroxyantimonat, Hexachloroantimonat, Tetrakispentafluorophenylborat, Tetrakis-(pentafluoromethylphenyl)-borat, Bi-(trifluoromethylsulfonyl)-amide und Tris-(trifluoromethylsulfonyl)-methide genannt. Ferner sind insbesondere für Iodonium-basierende Initiatoren auch Chlorid, Bromid oder Iodid als Anionen denkbar, wobei aber Initiatoren, die im Wesentlichen frei von Chlor und Brom sind, bevorzugt sind.

Auf den einschlägigen Stand der Technik, etwa der Offenbarung in der WO 2015 174303 A, wird verweisen.

(c-IIb) Härter für feuchtehärtende Epoxidsysteme

Wird als reaktive Komponente (b) eine feuchtigkeitshärtende Zusammensetzung eingesetzt, so ist bevorzugt als Reagenz (c) ein feuchtigkeitsaktivierbarer Härter zugegen. Vorteilhaft umfasst dieser zumindest ein geblocktes Amin oder besteht daraus.

Unter einem geblockten Amin werden vorliegend Verbindungen verstanden, die in Gegenwart von Wasser Amine freisetzen.

In bevorzugter Ausgestaltung des erfindungsgemäßen Klebebandes ist das geblockte Amin ein solches, das nach vollständiger Reaktion mit Wasser im entblockten Zustand wenigstens zwei Amin-Wasserstoffatome enthält, da solche Verbindungen mit Epoxiden thermisch stabile Netzwerke bilden, die den Klebstoffen hohe Verklebungsfestigkeiten

verleihen. Unter einem Amin-Wasserstoff wird ein Wasserstoff-Atom verstanden, das unmittelbar kovalent an ein Stickstoffatom gebunden ist.

Im Rahmen der vorliegenden Erfindung ist das geblockte Amin vorzugsweise ausgewählt aus der Gruppe umfassend oder bestehend aus Oxazolidinen, Iminen, Enamine, Silylamine oder Kombinationen von diesen, wobei das geblockte Amin insbesondere ein Oxazolidin ist. Ein großer Vorteil an Oxazolidinen ist die kommerzielle Verfügbarkeit, die hohe Reaktivität des freigesetzten sekundären Amins und das unbedenkliche Abspaltungsprodukt, welches im Entblockungsschritt außerdem freigesetzt wird. Insofern ist es besonders bevorzugt, dass das geblockte Amin wenigstens zwei Oxazolidingruppen enthält.

Bei der Verwendung von Iminen, insbesondere Aldiminen ist es vorteilhaft eine feuchtelatente Säure zuzusetzen, die insbesondere ausgewählt ist aus Alkenylestern wie beispielsweise Vinylacetat, Silylester oder Mischungen von diesen. Die Menge an feuchtelatenter Säure beträgt bezogen auf die Menge an Imin insbesondere 0,001 bis 0,15 Mol an feuchtelatenter Säure pro Mol Imin, vorzugsweise 0,01 bis 0,1 Mol an feuchtelatenter Säure pro Mol Imin.

Die feuchtigkeitshärtende Zusammensetzung kann optional einen oder mehrere Stabilisatoren enthalten. Der Stabilisator ist dabei vorzugsweise ausgewählt aus Wasserfängern, Aminfängern sowie Kombinationen aus diesen. Durch den Einsatz dieser Stabilisatoren kann die Lagerfähigkeit des erfindungsgemäßen Klebstoffilms verbessert werden.

Auf den Stand der Technik und die Offenbarung in der WO 2017 186528 A wird verweisen.

## Additive

Zusätzlich zu den vorgenannten Komponenten (a), (b) und (c) kann der Haftklebstoffilm Additive enthalten. Dabei können grundsätzlich die aus dem Stand der Technik genannten Additive auch für die vorliegende Erfindung genutzt werden.

Als Additive oder Zusatzstoffe kommen sämtliche dem Fachmann bekannte Zusatzstoffe für Klebebänder und Haftklebemassen in Betracht, wie beispielsweise Beschleuniger, Klebharze, sogenannte Tackifier, Rheologiemodifizierer, Schäumungsmittel, Füllstoffe, Adhäsionsvermittler, Polyole, Alterungsschutzmittel, Lichtschutzmittel, Farbstoffe, Schlagzähmodifizierer, Phenoxyharze oder Mischungen von diesen.

Dabei können für die vorliegende Erfindung optional Klebharze verwendet werden, um die haftklebrigen Eigenschaften des erfindungsgemäßen Klebstofffilms zu justieren. Klebharze, wie sie für Klebmassen, insbesondere für Haftklebemassen, häufig eingesetzt werden, unterscheiden sich von den Reaktivkomponenten (b), letztere werden oft auch Reaktivharze genannt. Unter einem "Klebharz" wird entsprechend dem allgemeinen Fachmannverständnis ein oligomeres oder polymeres Harz verstanden, das lediglich die Adhäsion (den Tack, die Eigenklebrigkeit) der Haftklebemasse im Vergleich zu der kein Klebharz enthaltenden, ansonsten aber identischen Haftklebemasse erhöht. Typischerweise enthalten Klebharze außer Doppelbindungen (im Fall der ungesättigten Harze) keine reaktiven Gruppen, da sich ihre Eigenschaften über die Lebensdauer des Haftklebstoffes nicht ändern sollen. Insbesondere sind Klebharze im Unterschied zu den Reaktivkomponente(n) (Reaktivharzen) solche oligomeren oder polymeren Verbindungen, die an der Härtungsreaktion nicht teilnehmen. Für eher unpolare Haftklebemassen werden als Klebharze beispielsweise partiell oder vollständig hydrierte Harze auf Basis von Kolophonium und Kolophoniumderivaten, hydrierte Polymerisate des Dicyclopentadiens, partiell, selektiv oder vollständig hydrierte Kohlenwasserstoffharze auf Basis von C5-, C5/C9- oder C9-Monomerströmen, Polyterpenharze auf Basis von a-Pinen und/oder ß-Pinen und/oder $\delta$-Limonen und/oder $\Delta$3-Caren, hydrierte Polymerisate von bevorzugt reinen C8- und C9-Aromaten. Vorgenannte Klebharze können sowohl allein als auch im Gemisch eingesetzt. Für polare Haftklebemassen sind polare Harze als kompatibel dem Fachmann bekannt, beispielsweise Terpenphenol oder Kolophonium basierende Harze. Die vorstehend erwähnten Kolophoniumharze schließen zum Beispiel natürliches Kolophonium, polymerisiertes Kolophonium, teilweise hydriertes Kolophonium, vollständig hydriertes Kolophonium, veresterte Produkte dieser Kolophoniumarten (wie Glycerinester, Pentaerythritester, Ethylenglycolester und Methylester) und Kolophoniumderivate (wie Disproportionierungs-Kolophonium, mit Fumarsäure modifiziertes Kolophonium und mit Kalk modifiziertes Kolophonium) ein. Auch Klebharze auf der Basis von Acrylaten und Methacrylaten sind bekannt. Auf die Darstellung des Wissensstandes im "Handbook of Pressure Sensitive Adhesive Technology" von Donatas Satas (van Nostrand, 1989) Kapitel 25 "Tackifier Resins" sei hingewiesen.

## Reaktives Haftklebstofffilm-System

In einer vorteilhaften Ausführung der Erfindung werden zwei erfindungsgemäße Haftklebstofffilme in Form eines reaktiven Haftklebstofffilm-Systems eingesetzt, welches dadurch gekennzeichnet ist, dass der erste reaktive Haftklebstofffilm A, neben der Filmbildner-Matrix (a) und mindestens einer reaktiven Komponente (b), einen Initiator (c), insbesondere Radikalinitiator, enthält und der zweite reaktive Haftklebstofffilm B, neben der Filmbildner-Matrix (a) und mindestens einer reaktiven Komponente (b), einen Aktivator beziehungsweise Härter (c) enthält. Bevorzugt wird Eisen(II)-phthalocyanin als Aktivator eingesetzt.

Initiator und Aktivator beziehungsweise Härter sind dabei insbesondere derart aufeinander abgestimmt, dass eine Härtungsreaktion mittels der Reaktivkomponenten erst dann signifikant gestartet wird, wenn die Filme in Kontakt miteinander gebracht werden.

Außerdem wird erfindungsgemäß ein reaktives Haftklebstofffilm-System bereitgestellt, umfassend zwei oder mehrere reaktive Haftklebstofffilme, wie oben definiert, dadurch gekennzeichnet, dass ein erster reaktiver Haftklebstofffilm A einen Initiator, insbesondere Radikalinitiator enthält und ein zweiter reaktiver Haftklebstofffilm B einen Aktivator enthält und diese beiden reaktiven Haftklebstofffilme A und B jeweils abwechselnd vorliegen.

Der erste und der zweite reaktive Haftklebstofffilm A und B härten aus und vernetzen gegebenenfalls, sobald sie unter mäßigem Druck, insbesondere 0,5 bis 3 bar, bei Raumtemperatur (23 °C) flächig in Kontakt gebracht werden. Wahlweise sind höhere bzw. niedrigere Drücke und/oder Temperaturen auch möglich. Der genannte mäßige Druck soll insbesondere leicht von Hand zu erreichen sein. Die Kontaktzeit beträgt erfindungsgemäß bei Raumtemperatur einige Sekunden bis einige Minuten, bevorzugt 10 bis 60 Sekunden. Der Druck kann maschinell oder manuell aufgebracht werden.

Werden die beiden reaktiven Haftklebstofffilme A und B, wie oben beschrieben, zuvor auf den zu verklebenden Substraten aufgebracht, kommt durch die oben beschriebene Aushärtung und gegebenenfalls Vernetzung eine dauerhafte Verklebung der Substrate zu Stande. Alternativ kann zunächst auch Haftklebstofffilm A auf das erste zu verklebende Substrat aufgebracht und auf Haftklebstofffilm A Haftklebstofffilm B aufgebracht werden. Anschließend wird dann das zweite zu verklebende Substrat auf Haftklebstofffilm B aufgebracht. Durch die Haftklebrigkeit der Filme wird die Vorpositionierung erleichtert.

Weiterhin kann das reaktive Haftklebstofffilmsystem der Erfindung weitere Filme, Schichten, Klebstoffe sowie permanente und oder temporäre Träger umfassen und somit ein Klebeband darstellen. Bevorzugt liegt der reaktive Haftklebstofffilm als Transferklebeband vor, liegt also vor der Applikation zwischen flexiblen Linern vor, die mit einer Trennschicht versehen sind und/oder antiadhäsive Eigenschaften aufweisen.

Geeignete Trägermaterialien sind einem Fachmann auf dem Gebiet bekannt. Beispielsweise können als permanente Träger Folien (Polyester, PET, PE, PP, BOPP, PVC, Polyimide), Vliese, Schäume, Gewebe und/oder Gewebefolien verwendet werden. Temporäre Träger sollten mit einer Trennschicht versehen sein, wobei die Trennschicht in der Regel aus einem Silikontrennlack oder einem fluorierten Trennlack besteht oder polyolefinischen Charakter (HDPE, LDPE) aufweist.

Gegebenenfalls kann es notwendig sein, dass die Oberflächen der zu verklebenden Substrate durch ein physikalisches, chemisches und/oder physikalisch-chemisches Verfahren vorbehandelt werden. Hier ist beispielsweise das Aufbringen eines Primers oder einer Haftvermittlerzusammensetzung vorteilhaft.

In anderen Ausführungen der Erfindung werden ein-, zwei- oder mehrschichtige Haftklebstofffilm-Systeme aus erfindungsgemäßen Haftklebstofffilmen zur Aushärtung gebracht, indem ein Trigger wie zum Beispiel Plasma, Strahlung - wie Elektronenstrahlen oder Licht (UV, IR, sichtbares Licht etc.) - oder Wärme als Starter genutzt wird und insbesondere ein vorhandener Initiator oder Aktivator oder Härter derart erst aktiviert wird. Andere Trigger als das in diesen Schriften genannte Plasma sind erfindungsgemäß ebenfalls möglich, etwa Feuchtigkeitseinfluss für feuchtehärtende Systeme. Im Zusammenhang mit den vorgenannten Mechanismen seien neben acrylatbasierenden Reaktivsystemen insbesondere auch die bereits diskutierten Epoxid- beziehungsweise Epoxid-Härter-Reaktivsysteme genannt. Auf die eingangs hierzu genannten Schriften - etwa WO 2015 150251 A und WO 2017 021085 A - wird verweisen.

Eine weitere Ausführung der Erfindung umfasst eine laserablatierbare Schicht sowie ein Verfahren, wie es die WO 2017 102282 zeigt.

**Experimenteller Teil**

Prüfmethoden:

*I. Bestimmung der Kristallitschmelz- bzw. der Kristallisationsenthalpie mittels DSC*

Die Bestimmung der Kristallitschmelz- bzw. der Kristallisationsenthalpie erfolgt über Dynamische Differenzkalorimetrie nach DIN EN ISO 11357-3:2013-04. Hierzu werden ungefähr 7 mg der Probe in einen Aluminiumtiegel eingewogen und anschließend in das Messgerät (Gerät: DSC 204 F1, Fa. Netzsch) eingebracht. Als Referenz wird ein leerer Tiegel benutzt. Die Messung erfolgt in Stickstoffatmosphäre.
Als Messprogramm wurde verwendet:

(1) Abkühlung von Raumtemperatur (23 °C) auf- 140 °C; Abkühlrate - 10 K/min
(2) Aufheizen auf eine Temperatur, die mindestens 30 K oberhalb der Peaktemperatur des Schmelzpeaks liegt, zumindest aber+ 100 °C; Aufheizrate + 10 K/min
(3) Abkühlen auf - 140 °C; Abkühlrate - 10 K/min

(4) Aufheizen auf eine Temperatur, die mindestens 30 K oberhalb der Peaktemperatur des Schmelzpeaks liegt, zumindest aber+ 100 °C, Aufheizrate + 10 K/min.

Die genaue Wahl der Zieltemperatur für das Aufheizen erfolgt so, dass die erwartete Schmelztemperatur um mindestens 30 K überschritten wird und beträgt mindestens + 100 °C.
Die Bestimmung der Kristallitschmelz- bzw. der Kristallisationsenthalpien erfolgt durch Integration der entsprechenden Peaks und wird in J/g angegeben. Als Peaktemperatur wird der Peak-Extremwert angesehen.

*II. Push-out Test*

Der Push-Out-Test ermöglicht Aussagen über die Verklebungsfestigkeit eines Klebeprodukts in Richtung der Klebschichtnormalen. Dazu wird ein kreisförmiges erstes Substrat (auch als "Substrat 1" bezeichnet) mit Durchmesser 21 mm mit dem zu untersuchenden Klebefilm-System (jeweils kreisförmiger Stanzling oder Zuschnitt, Durchmesser 21 mm) auf einem quadratischen zweiten Substrat (auch als "Substrat 2" bezeichnet), Dimensionen 40 mm x 40 mm, verklebt. Das zweite Substrat weist eine zentrierte, kreisförmige Bohrung (Loch) mit Durchmesser 9 mm auf. Die Zentren von erstem Substrat, Klebefilm-Verbund und zweitem Substrat sind deckungsgleich (zentrierte Verklebung aller Komponenten).
Herstellung des Verbundes: Klebefilm A wird bei 23 °C deckungsgleich auf das erste Substrat vorlaminiert und Klebefilm B deckungsgleich auf den Klebefilm A. Der Vor-Verbund aus dem ersten Substrat und den Klebefilmen A und B wird anschließend mit der Seite des Klebefilms B zentriert auf das zweite Substrat positioniert. Anschließend wird der Gesamtverbund unter einem Druck von 3 bar bei 23 °C für 30 s verpresst. Der Gesamtverbund wird für 48 h bei 23 °C und 50 % relativer Feuchte ausgehärtet.
Mittels eines zylindrischen Stempels, der in eine Zugprüfmaschine eingespannt ist, wird mittig durch das Loch in Substrat 2 mit senkrechter Druckrichtung auf den Verbund aus den Klebefilmen und erstem Substrat gedrückt und so eine Kraft auf die Klebefuge im Verbund ausgeübt. Dabei wird das zweite Substrat derart in der Zugprüfmaschine fixiert, dass eine möglichst allseitige, flächige Auflage/Fixierung gewährleistet ist, sodass der Verbund aus Klebefilmen und erstem Substrat frei durch den Stempel herausgedrückt werden kann. Die Prüfgeschwindigkeit (Druckbewegung des Stempels) liegt bei 10 mm/min.
Registriert wird diejenige Kraft, bei der die Verklebung versagt und der Verbund aus erstem Substrat und zweitem Substrat gelöst wird. Die Kraft wird auf die Verklebungsfläche (282 $mm^2$) bezogen, so dass Push-Out-Festigkeiten in Einheiten von $N/mm^2$ (= MPa) resultieren. Das Prüfklima ist 23 °C und 50 % relative Luftfeuchtigkeit. Die Ergebnisse sind Mittelwerte aus drei Einzelprüfungen und werden in MPa angegeben.
Eingesetzte Substrate (vergleiche Tabelle):
Erstes Substrat: Polycarbonat (PC; Makrolon GP 099; 3 mm dick
Zweites Substrat: Polycarbonat oder glasfaserverstärktes Polyamid (PA; Ultramid B3WG5, PA6-GF25, 3 mm dick) oder anodisiertes Aluminium (Al; E6EV1; 1 mm dick), je nach Angabe
Für reaktive Haftklebemassen wird eine Push-Out-Festigkeit von zumindest 1 MPa auf PC angestrebt, gute Push-Out-Festigkeit wird bei zumindest 2,5 MPa auf PC erreicht.

*III. Lagerstabilität*

Die Lagerstabilität wird im Push-out-Test (gemäß Test II) nach Lagerung der nicht ausgehärteten Klebefilme bewertet; die Lagerung erfolgt eingeschweißt in einen Aluminiumverbundfolienbeutel; Klima beim Einbringen in den Beutel und während der Lagerung: Temperatur 23 °C und 50 % relative Feuchte. Die Klebefilme werden nach Lagerung zur Herstellung des Prüf-Verbundes gemäß Test II eingesetzt.
Verglichen werden die Werte der nach dieser Lagerung eingesetzten Klebefilme mit denen der frisch hergestellten und dann eingesetzten Klebefilme.
Dabei wird insbesondere ein Abfall der Prüfwerte gegenüber den Frischwerten auf nicht weniger als die Hälfte nach 21 Tagen Lagerzeit als ausreichend lagerstabil bewertet.

*Auswahl der Matrixpolymere*

Eine Vielzahl kommerziell erhältlicher Polymere wurde gemäß DSC untersucht, um aus den Peaktemperaturen der verschiedenen Abkühl- und Aufheizkurven erfindungsgemäß geeignete, die erfindungsgemäß bevorzugten und die erfindungsgemäß nicht geeigneten Polymere identifizieren zu können. Die Liste gibt jedoch nur ein Beispiel der jeweiligen Vertreter wieder und begrenzt die Erfindung grundsätzlich nicht auf untersuchte Polymere. Insbesondere zeigt die Tabelle, dass der Fachmann mit Hilfe der Herstellerangaben zum Kristallisationsverhalten eine Vorauswahl ohne aufwändige DSC-Messung treffen kann. (*) wenn Herstellerangaben auf englisch verfügbar, dort so beibehalten.

In der Tabelle:

H(↓): Kristallisationsenthalpie in der DSC-Messung beim Abkühlen ausgehend von einer Temperatur, die mindestens 30 K oberhalb der Peaktemperatur des Schmelzpeaks liegt, zumindest aber 100 °C beträgt, bei einer Abkühlgeschwindigkeit von 10 K/min. Sollwert: H(↓) < 1 J/g

H(↑) Kristallisationsenthalpie in der DSC-Messung einer sofort an den vorstehend beschriebenen Abkühlvorgang anschließenden zweiten Aufheizkurve bei einer Aufheizrate von 10 K/min. Bevorzugt H(t) < 26 J/g, besonders bevorzugt H(t) < 10 J/g,

H(L): Kristallit-Schmelzenthalpie in der ersten Aufheizkurve der DSC-Messung nach definierter Lagerung; Aufheizrate 10 K/min. Definierte Lagerung: Lagerdauer mindestens 1 Monat bei Temperatur im Bereich von 15 bis 25 °C und relativer Luftfeuchte im Bereich von 30 bis 70 %.

Sollwert: H(L) > 15 J/g, bevorzugt H(L) > 25, bevorzugter 50 J/g > H(L) > 15 J/g.

Spalte 8:

e: erfindungsgemäß (Sollwert H(↓) erfüllt)
eb: erfindungsgemäß bevorzugt
ne: nicht erfindungsgemäß

Spalte 9: in angegebenem Beispiel verwendet

| **Handelsname (jeweils registrierte Warenzeichen)** | **Hersteller** | **Herstellerangabe (*) bezüglich Kristallisation** | **Chemische Basis** | **H(↓) DSC J/g** | **H(↑) DSC J/g** | **H(L) DSC J/g** | **8** | **9** |
|---|---|---|---|---|---|---|---|---|
| Desmocoll 406 | Covestro | low crystallization rate | PE-PU | *0* | *0* | 35,4 | eb | |
| Desmomelt 530 | Covestro | stark kristallisierend | PE-PU | 1,83 | 27,7 | 53,6 | ne | V1 |
| Desmocoll 530-2 | Covestro | stark kristallisierend | PE-PU | *0* | *31,91* | *55,91* | e | |
| Desmocoll 526 | Covestro | low crystallization rate | PE-PU | *0* | *0* | 34,05 | eb | E1, E3, E4,E 8,E9 , E12 |
| Epacol TK42 | Epaflex | high crystallization rate | PE-PU | *32,92* | *0* | 53,3 | ne | |
| Epacol TK570 | Epaflex | very high crystallization rate | PE-PU | *35,42* | *0* | 62,34 | ne | |
| Epacol TK54 | Epaflex | high crystallization rate | PE-PU | *0* | *31,14* | 48,2 | e | |
| Pearlstick 40-70/08 | Lubrizol | extremely high crystallization rate | PE-PU | *38,02* | *0* | 59,73 | ne | |
| Pearlstick 40-70/14 | Lubrizol | extremely high crystallization rate | PE-PU | *49,56* | *0* | 65,15 | ne | |
| Pearlstick 45-80/16 | Lubrizol | very slow | PE-PU | *0* | *2,28* | 41,82 | eb | E2 |
| Pearlstick 46-10/01 | Lubrizol | very high crystallization rate | PE-PU | *38,71* | *0* | 50,08 | ne | |

(fortgesetzt)

| Handelsname (jeweils registrierte Warenzeichen) | Hersteller | Herstellerangabe (*) bezüglich Kristallisation | Chemische Basis | H(↓) DSC J/g | H(↑) DSC J/g | H(L) DSC J/g | 8 | 9 |
|---|---|---|---|---|---|---|---|---|
| Pearlstick 46-10/06 | Lubrizol | very high crystallization rate | PE-PU | *39,43* | *0* | 51,61 | ne | |
| Pearlstick 46-10/12 | Lubrizol | very high crystallization rate | PE-PU | *42,31* | *0* | 54,62 | ne | |
| Pearlstick 46-10/16 | Lubrizol | very high crystallization rate | PE-PU | *33,58* | *3,04* | 53,31 | ne | |
| Pearlstick 48-60/08 | Lubrizol | very high crystallization rate | PE-PU | *30,27* | *7,65* | 55,02 | ne | |
| Pearlstick 48-60/15 | Lubrizol | very high crystallization rate | PE-PU | *3,98* | *30,87* | 52,6 | ne | |
| Pearlbond 960 EXP | Lubrizol | soft hotmelt | PEt-PU | *0* | *0* | 5,87 | ne | |
| Pearlbond 360 EXP | Lubrizol | soft hotmelt | PEt-PU | *0* | *0* | 1,51 | ne | V3, V4 |
| Irostic S6148-16 | Huntsman | low crystallization rate | PE-PU | *0* | *8,83* | 40,98 | eb | E5 |
| Irostic S6440-05 | Huntsman | low crystallization rate | PE-PU | *0* | *33,56* | 49,79 | e | |
| Irostic S6440-12 | Huntsman | low crystallization rate | PE-PU | *0* | *29,28* | 42,51 | e | E6 |
| Irostic S6558-06 | Huntsman | low crystallization rate | PE-PU | *0* | *0* | 23,87 | eb | E7 |
| Irostic S6558-08 | Huntsman | low crystallization rate | PE-PU | *0* | *0* | 22,21 | eb | |
| Irostic S7614-08 | Huntsman | low crystallization rate | PE-PU | *0* | *31,34* | 40,31 | e | |
| Irostic S7614-12 | Huntsman | Low crystallization rate | PE-PU | *0* | *30,63* | 40,82 | e | |
| Irostic S7614-14 | Huntsman | low crystallization rate | PE-PU | *0* | *30,48* | 41,75 | e | |
| Irostic S7730-05 | Huntsman | strong crystallization rate | PE-PU | *5,13* | *30,66* | 46,64 | ne | |
| Irostic S8612-12 | Huntsman | strong crystallization rate | PE-PU | *45,28* | *0* | 56,77 | ne | |
| Irostic S8743-12 | Huntsman | low crystllization rate | PE-PU | *2,92* | *25,29* | 51,19 | ne | |
| Irostic S8743-16 | Huntsman | low crystllization rate | PE-PU | 1,71 | 25,34 | 46,88 | ne | |
| Irostic S9815-08 | Huntsman | strong crystallization rate | PE-PU | *50,6* | *0* | 63,92 | ne | |
| Irostic S9815-12 | Huntsman | strong crystallization rate | PE-PU | *40,03* | *3,13* | 53,84 | ne | |

(fortgesetzt)

| Handelsname (jeweils registrierte Warenzeichen) | Hersteller | Herstellerangabe (*) bezüglich Kristallisation | Chemische Basis | H(↓) DSC J/g | H(↑) DSC J/g | H(L) DSC J/g | 8 | 9 |
|---|---|---|---|---|---|---|---|---|
| Irostic S9815-14 | Huntsman | strong crystallization rate | PE-PU | *40,39* | *0* | 57,75 | ne | |
| Irostic S9827-12 | Huntsman | very strong crystallization rate | PE-PU | *0* | *30,77* | 47,57 | e | |
| Irostic S9827-18 | Huntsman | very strong crystallization rate | PE-PU | *0* | *30,31* | 45,97 | e | |
| Elvax 40L-03 | Dow | n.a. | EVA | *33,4* | *0* | 44,12 | ne | |
| Elvax 150W | Dow | n.a. | EVA | *52,56* | *0* | 53,62 | ne | |
| Elvax 250A | Dow | n.a. | EVA | *56,11* | *0* | 66,77 | ne | |
| Elvax R260 | Dow | n.a. | EVA | *60,54* | *0* | 72,53 | ne | |
| Elastolan 1185A | BASF | n.a. | PEt-PU | *0* | *0* | 2,24 | ne | |
| Platamid M 1276 | Arkema | n.a. | CPA | *0* | *25,68* | 29,41 | e | E11, V2 |
| Levamelt 456 | Arlanxeo | low crystallinity | EVA | 19,88 | 0 | 19,4 | ne | |
| Lotader 4403 | Arkema | n.a. | TP | 52,02 | 0 | 56,12 | ne | |
| Dynacoll S-1401 | Evonik | slightly crystalline | CPE | 0 | 0,63 | 15,03 | e | E10 |

(*) Originalsprache beibehalten
(**) Chemische Basis: PE-PU = Polyester-Polyurethan EVA = Ethylen-Vinylacetat-Copolymer PEt-PU = Polyether-Polyurethan CPA = Copolyamid TP = Terpolymer von Ethylen, Acrylsäureester (18%) und Maleinanhydrid (0,3%) CPE = Copolyester

Folgende Polymere sind amorph oder im Wesentlichen amorph (zu geringe Kristallinität) und damit (alleinig) nicht erfindungsgemäß einsetzbar:

| Handelsname (jeweils registrierte Warenzeichen) | Hersteller | Chemische Basis | | verwendet in Beispiel |
|---|---|---|---|---|
| Levamelt 700 | Arlanxeo | Ethylenvinylacetat | amorph | |
| Levamelt 900 | Arlanxeo | Ethylenvinylacetat | amorph | |
| PKHA | InChemRez | Phenoxyharz | amorph | |
| PKHB | InChemRez | Phenoxyharz | amorph | |
| PKHH | InChemRez | Phenoxyharz | amorph | |
| Lotader AX 8900 | Arkema | Terpolymer von Ethylen, Acrylester and Glycidyl methacrylate | gering kristallin | |
| HYTEMP 4054 | Nippon Zeon | Polyacrylat-Elastomer | amorph | |
| Dynacoll S-EP1408 | Evonik | Copolyester | gering kristallin | |
| Nipol 1001 CG | Zeon Chemicals | heißpolymerisiertes Acrylnitril-butad iencopolymer (41 % ACN) | amorph | E12, V5 |

*Rohstoffe:*

| Chemikalie | Kurzform | CAS-Nr. und Bezuq |
|---|---|---|
| 3,4-Epoxycyclohexylmethylmethacrylat | TTA15 | CAS 2386-87-0, TTA® 15 (Fa. Synasia) Verdampfungsrate 96 %/10d |
| Trimethylolpropan-propoxylat-triacrylat | TMPPTA | CAS 53879-54-2, (Fa. Sigma-Aldrich) Verdampfungsrate 4 %/10d |
| Eisen(II)-phthalocyanin | FePc | CAS 132-16-1, (Fa. Sigma Aldrich) |
| Di-isopropylbenzol-mono-hydroperoxid | Peroxan | CAS 26762-93-6, 50 gew.%ige Lösung von Diisopropylhydroperoxid in Diisopropylbenzol Peroxan® IHP-50 (Fa. Pergan) |
| 2-Hydroxy-3-phenoxypropylacrylat | CN131B | CAS 16969-10-1, CN131 B® (Fa. Sartomer) Verdampfungsrate 2 %/10d |
| 3-Methacryloxypropyltrimethoxysilan | MEMO | CAS 2530-85-0, Dynasilan MEMO® (Fa. Evonik) |
| Aerosil® R 202 | R202 | hydrophobierte pyrogene Kieselsäure (Fa. Evonik) |
| Phenoxyethylmethacrylat | PHEMA | CAS 10595-06-9, Miramer M141® (Fa. Miwon) Verdampfungsrate 55 %/10d |
| 2-Phenoxyethylacrylat | PEA | CAS 48145-04-6, (Fa. Sigma-Aldrich) Verdampfungsrate 53 %/10d |

*Herstellung der Beispiele:*

Jedes der erfindungsgemäßen Beispiele E1 bis E12 und der Vergleichsbeispiele V1 bis V5 umfasst ein Haftklebstofffilm-System aus zwei reaktiven Haftklebstofffilmen, wobei der erste reaktive Haftklebstofffilm (auch als "Tape A" bezeichnet) einen Radikalinitiator und der zweite reaktive Haftklebstofffilm (auch als "Tape B" bezeichnet) einen Aktivator enthält. Die Komponenten (a) polymere Filmbildner-Matrix, und (b) Reaktivkomponente(n) sind für die Tapes A und B jedes einzelnen Beispiels identisch gewählt. Die konkrete Zusammensetzung der Tapes A und B für jedes Beispiel geben die nachfolgenden zwei Tabellen in Gew.-% an. Jedes der Beispiele setzt sich also jeweils aus einem Tape A der ersten Tabelle und einem Tape B der zweiten Tabelle, angegeben für das jeweilige Beispiel, als Zwei-Klebstofffilm-System zusammen. Die chemische Härtung wird dabei durch das Zusammenfügen der Filme gestartet.

*Herstellung des ersten reaktiven, haftklebrigen Klebstofffilms (Tape A), umfassend einen Radikalinitiator*

Eine etwa 20%ige Lösung des Matrixpolymers (Polymerlösung) wird, wenn nicht anders angegeben, mit dem 3,4-Epoxycyclohexylmethylmethacrylat, dem Trimethylolpropan-propoxylattriacrylat, sowie dem Diisopropylhydroperoxid und dem Aerosil® R202 mit einem handelsüblichen Laborrührer 60 Minuten gemischt. Die erhaltene homogene Mischung wird mit Hilfe eines handelsüblichen Laborstreichtisches (zum Beispiel von der Firma SMO (Sondermaschinen Oschersleben GmbH)) mit einem Streichmesser auf einer silikonisierten Polyesterfolie (Trennliner) ausgestrichen. Anschließend wird das Aceton bei 60°C im Umlufttrockenschrank 10 Minuten abgedampft. Die Spaltbreite beim Ausstreichen wird so eingestellt, dass nach dem Abdampfen des Lösemittels ein 50 μm dicker Film erhalten wird. Der erhaltene haftklebrige, reaktive Film A wird bis zur Verklebung mit einer zweiten silikonisierten Polyesterfolie (Trennliner) abgedeckt und aufbewahrt.

*Herstellung des zweiten reaktiven, haftklebrigen Klebstofffilms (Tape B), umfassend einen Aktivator*

Eine etwa 20%ige Lösung des Matrixpolymers (Polymerlösung) wird, wenn nicht anders angegeben, mit dem 3,4-Epoxycyclohexylmethylmethacrylat, dem Trimethylolpropan-propoxylattriacrylat, sowie dem Eisenphtalocyanin und dem Aerosil® R202 mit einem handelsüblichen Laborrührer 60 Minuten gemischt. Die erhaltene homogene Mischung wird mit Hilfe eines handelsüblichen Laborstreichtisches (zum Beispiel von der Firma SMO (Sondermaschinen Oschersleben GmbH)) mit einem Streichmesser auf einer silikonisierten Polyesterfolie (Trennliner) ausgestrichen. Anschließend wird das Aceton bei 60°C im Umlufttrockenschrank 10 Minuten abgedampft. Die Spaltbreite beim Ausstreichen wird so

eingestellt, dass nach dem Abdampfen des Lösemittels ein 50 μm dicker Film erhalten wird. Der erhaltene haftklebrige, reaktive Film B wird bis zur Verklebung mit einer zweiten silikonisierten Polyesterfolie (Trennliner) abgedeckt und aufbewahrt.

Als Lösemittel wurde, wenn nicht anders angegeben, Aceton verwendet.

Zusammensetzung Tape A (jeweils in Gew.-%)

| Beispiel | Typ Matrixpolymer | Matrixpolymer | TTA15 | PHEMA | PEA | CN131B | TMPPTA | Peroxan (Initiator Tape A) | MEMO | R202 |
|---|---|---|---|---|---|---|---|---|---|---|
| V1 | Desmomelt 530 | 32,97 | 44,02 | | | | 2,81 | 9,37 | 0,94 | 9,89 |
| V2 | Platamid M1276 | 32,97 | 44,02 | | | | 2,81 | 9,37 | 0,94 | 9,89 |
| V3 | Pearlbond 360 EXP | 37,97 | 39,02 | | | | 2,81 | 9,37 | 0,94 | 9,89 |
| V4 | Pearlbond 360 EXP | 32,97 | | 44,02 | | | 2,81 | 9,37 | 0,94 | 9,89 |
| V5 | Nipol 1001 CG | 32,97 | 44,02 | | | | 2,81 | 9,37 | 0,94 | 9,89 |
| E1 | Desmocoll 526 | 32,97 | 44,02 | | | | 2,81 | 9,37 | 0,94 | 9,89 |
| E2 | Pearlstick 45/80-16 | 32,97 | 44,02 | | | | 2,81 | 9,37 | 0,94 | 9,89 |

| Beispiel | Typ Matrixpolymer | Matrixpolymer | TTA15 | PHEMA | PEA | CN131B | TMPPTA | Peroxan (Initiator Tape A) | MEMO | R202 |
|---|---|---|---|---|---|---|---|---|---|---|
| E3 | Desmocoll 526 | 32,97 | 22,01 | | | 22,01 | 2,81 | 9,37 | 0,94 | 9,89 |
| E4 | Desmocoll 526 | 15,00 | 61,99 | | | | 2,81 | 9,37 | 0,94 | 9,89 |
| E5 | Irostic S6148-16 | 32,97 | 44,02 | | | | 2,81 | 9,37 | 0,94 | 9,89 |
| E6 | Irostic S6440-12 | 32,97 | 44,02 | | | | 2,81 | 9,37 | 0,94 | 9,89 |
| E7 | Irostic S6558-06 | 32,97 | 44,02 | | | | 2,81 | 9,37 | 0,94 | 9,89 |
| E8 | Desmocoll 526 | 32,97 | | | 44,02 | | 2,81 | 9,37 | 0,94 | 9,89 |
| E9 | Desmocoll 526 | 32,97 | | 44,02 | | | 2,81 | 9,37 | 0,94 | 9,89 |
| E10 | Dynacoll S-1401 | 43,00 | 34,59 | | | | 2,21 | 9,37 | 0,94 | 9,89 |
| E11 | Platamid M1276 | 25,00 | 51,99 | | | | 2,81 | 9,37 | 0,94 | 9,89 |
| E12 | Nipol 1001 CG / Desmocoll 526 = 1:1 | 32,97 | 44,02 | | | | 2,81 | 9,37 | 0,94 | 9,89 |

Zusammensetzung Tape B (jeweils in Gew.-%)

| Beispiel | Typ Matrixpolymer | Matrixpolymer | TTA15 | PHEMA | PEA | CN131B | TMPPTA | FePc Aktivator Tape B | MEMO | R202 |
|---|---|---|---|---|---|---|---|---|---|---|
| V1 | Desmomelt 530 | 36,63 | 47,34 | | | | 3,02 | 1,01 | 1,01 | 10,99 |
| V2 | Platamid M1276 | 36,63 | 47,34 | | | | 3,02 | 1,01 | 1,01 | 10,99 |
| V3 | Pearlbond 360 EXP | 41,63 | 42,34 | | | | 3,02 | 1,01 | 1,01 | 10,99 |
| V4 | Pearlbond 360 EXP | 36,63 | | 47,34 | | | 3,02 | 1,01 | 1,01 | 10,99 |
| V5 | Nipol 1001 CG | 36,63 | 47,34 | | | | 3,02 | 1,01 | 1,01 | 10,99 |
| E1 | Desmocoll 526 | 36,63 | 47,34 | | | | 3,02 | 1,01 | 1,01 | 10,99 |
| E2 | Pearlstick 45/80-16 | 36,63 | 47,34 | | | | 3,02 | 1,01 | 1,01 | 10,99 |
| E3 | Desmocoll 526 | 36,63 | 23,67 | | | 23,67 | 3,02 | 1,01 | 1,01 | 10,99 |
| E4 | Desmocoll 526 | 15,00 | 68,97 | | | | 3,02 | 1,01 | 1,01 | 10,99 |
| E5 | Irostic S6148-16 | 36,63 | 47,34 | | | | 3,02 | 1,01 | 1,01 | 10,99 |
| E6 | Irostic S6440-12 | 36,63 | 47,34 | | | | 3,02 | 1,01 | 1,01 | 10,99 |
| E7 | Irostic S6558-06 | 36,63 | 47,34 | | | | 3,02 | 1,01 | 1,01 | 10,99 |
| E8 | Desmocoll 526 | 36,63 | | | 47,34 | | 3,02 | 1,01 | 1,01 | 10,99 |
| E9 | Desmocoll 526 | 36,63 | | 47,34 | | | 3,02 | 1,01 | 1,01 | 10,99 |
| E10 | Dynacoll S-1401 | 47,30 | 37,30 | | | | 2,39 | 1,01 | 1,01 | 10,99 |
| E11 | Platamid M1276 | 26,63 | 57,34 | | | | 3,02 | 1,01 | 1,01 | 10,99 |
| E12 | Nipol 1001 CG / Desmocoll 526 = 1:1 | 36,63 | 47,34 | | | | 3,02 | 1,01 | 1,01 | 10,99 |

Alle hergestellten Beispiele und Vergleichsbeispiele mit Ausnahme von V2 zeigten Haftklebrigkeit, nämlich Klebkräfte im unausgehärteten Zustand von mehr als 1 N/cm gemäß der im Rahmen dieser Schrift dargestellten Messmethode zur Bestimmung der Haftklebrigkeit. Bei V2 lag dieser Wert unter 1 N/cm.

Lagerstabilität

Die Lagerstabilität wurde mittels des Push-out-Versuchs nach verschiedenen Lagerzeiten ermittelt. Nachfolgende Tabelle fasst die Ergebnisse zusammen:

| Beispiel | Substrat 2 | frisch [MPa] | 7 Tage [MPa] | 14 Tage [MPa] | 21 Tage [MPa] | 28 Tage [MPa] | 2 Monate [MPa] |
|---|---|---|---|---|---|---|---|
| | | | | | | | |
| | | | | | | | |
| | | | | | | | |
| E1 | PC | 4,7 | 3,0 | 3,5 | 3,4 | | 3,3 |
| | PA | 3,6 | 2,0 | 2,6 | 2,1 | | 1,9 |
| | Al | 5,2 | 4,2 | 3,5 | 3,2 | | 3,2 |
| E2 | PC | 4,3 | 4,4 | 3,1 | 3,6 | | |
| | PA | 2,6 | 2,2 | 1,4 | 1,6 | | |
| | AL | 3,7 | 4,5 | 2,9 | 3,3 | | |
| E3 | PC | 6,6 | 7,4 | 7,2 | 7,5 | | |
| | PA | 2,7 | 2,4 | 2,0 | 2,1 | | |
| | AL | 4,9 | 5,0 | 4,1 | 3,3 | | |
| E4 | PC | 1,1 | | | | | |
| | PA | 0,8 | | | | | |
| | AL | 0,8 | | | | | |
| E5 | PC | 7,7 | 6,3 | 7,0 | 6,5 | 7,3 | |
| | PA | 2,2 | 2,1 | 2,3 | 2,4 | 1,7 | |
| | Al | 5,4 | 4,7 | 4,2 | 4,3 | 3,8 | |
| E6 | PC | 4,4 | 4,4 | 5,1 | 4,6 | 5,0 | |
| | PA | 2,2 | 2,5 | 4,6 | 3,8 | 3,5 | |
| | Al | 6,0 | 5,9 | 6,6 | 6,7 | 6,3 | |
| E7 | PC | 6,4 | 6,6 | 6,5 | 6,6 | 6,0 | |
| | PA | 1,9 | 2,0 | 2,5 | 2,5 | 2,0 | |
| | Al | 7,2 | 5,1 | 6,1 | 5,1 | 4,5 | |
| E8 | PC | 7,2 | 6,9 | 7,0 | | | |
| | PA | 2,0 | 2,1 | 1,9 | | | |
| | Al | 2,0 | 1,5 | 1,3 | | | |
| E9 | PC | 6,3 | 6,0 | 5,8 | | | |
| | PA | 2,1 | 1,8 | 1,5 | | | |
| | Al | 2,3 | 1,9 | 1,5 | | | |
| E10 | PC | 2,9 | 3,0 | 2,5 | | | |
| | PA | 1,9 | 1,9 | 1,6 | | | |
| | AL | 2,0 | 1,7 | 1,9 | | | |
| E11 | PC | 5,7 | 4,1 | 3,4 | | | |
| | PA | 3,9 | 3,0 | 2,6 | | | |
| | AL | 4,4 | 3,9 | 3,2 | | | |
| E12 | PC | 1,9 | 2,0 | 2,0 | | | |
| | PA | 1,3 | 1,4 | 1,3 | | | |
| | Al | 1,3 | 1,0 | 1,2 | | | |
| V1 | PC | 3,8 | | | 1,7 | | 1,1 |
| | PA | 2,2 | | | 1,0 | | 0,9 |
| | Al | 2,8 | | | 1,1 | | 0,9 |

| Beispiel | Substrat 2 | frisch [MPa] | 7 Tage [MPa] | 14 Tage [MPa] | 21 Tage [MPa] | 28 Tage [MPa] | 2 Monate [MPa] |
|---|---|---|---|---|---|---|---|
| V3 | PC | 1,5 | 2,0 | 2,0 | | | |
| | PA | 0,9 | 1,1 | 0,8 | | | |
| | Al | 1,5 | 1,3 | n.a. | | | |
| V4 | PC | 2,1 | | | | | |
| | PA | 0,7 | | | | | |
| | Al | 2,0 | | | | | |
| V5 | PC | < 1 | | | | | |
| | PA | < 1 | | | | | |
| | Al | < 1 | | | | | |

Beurteilung der Experimente

Die Festigkeit in frischem Zustand sowie nach Lagerung wurde im Push-Out-Versuch ermittelt.

Beispiele V1 (Vergleich) und E1 (erfindungsgemäß) wurden über einen Lagerzeitraum von 2 Monaten miteinander vergleichen. Während das Vergleichsbeispiel V1 - das zum Stand der Technik zu zählen ist - einen deutlichen Abfall der Festigkeit nach Lagerung zeigt, ist die Lagestabilität des Beispiels E1 deutlich verbessert, auch über einen Zeitraum mehrerer Monate.

Die Beispiele E1, E2 sowie E5 bis E7 zeigen vorteilhafte Ausgestaltungen der Erfindung mit jeweils langsam kristallisierenden Polymeren als Matrix.

E6 verdeutlicht im Vergleich zu V1, dass neben der erfindungsgemäßen langsamen Kristallisationsgeschwindigkeit auch die Größe der Kristallit-Schmelzenthalpie in der ersten Aufheizkurve einen Einfluss auf die Lagerstabilität aufweist und diese daher bevorzugt maximal 50 mJ/mg beträgt.

Ein Vergleich der Beispiele E1, E3, E8 und E9, die alle Desmocoll 526 - hier ein erfindungsgemäß bevorzugtes Polyester-Polyurethan - als Matrixpolymer verwenden, belegt, dass die Nutzung unterschiedlicher Reaktivkomponenten (3,4-Epoxycyclohexylmethylmethacrylat, Trimethylolpropan-propoxylat-triacrylat, Phenoxymethylmethacrylat beziehungsweise 2-Phenoxymethylacrylalt) jeweils zu Ergebnissen mit guter Lagerstabilität führt und der erfindungsgemäße Effekt daher maßgeblich auf das verwendete Matrixpolymer zurückzuführen ist.

Im Vergleich des Beispiels E4 zum Beispiel E1 zeigt sich, dass ein übermäßig hoher Anteil an Reaktivkomponente (b) - hier die ebenfalls verwendete Reaktivkomponente 3,4-Epoxycyclohexylmethylmethacrylat wie in Beispiel E1 - zu einem Abfall der Push-Out-Frischwerte auf allen untersuchten Substraten führt. Daraus ergibt sich, dass neben dem erfindungsgemäßen Masseanteil der Reaktivkomponente(n) von zumindest 30 Gew.-% auch die obere Grenze vorteilhaft nicht überschritten wird, die aber abhängig von den gewählten Komponenten ist und für den Fachmann erkennbar bei 70 Gew.-% liegt.

Das erfindungsgemäße Beispiel E10 belegt, dass durch Erhöhung des Polymeranteils an der Gesamtformulierung bei einem erfindungsgemäß gewählten, aber wenig kristallinen Polymer ein ausreichend handhabungsstabiler, haftklebriger Film erhalten werden kann. Das eingesetzte Polymer Dynacoll S-1401 liegt mit einem Wert von 15,03 J/g an der unteren Sollgrenze der Kristallit-Schmelzenthalpie H(L) in der ersten Aufheizkurve nach definierter Lagerung. Dennoch kann durch entsprechende Gesamtformulierung ein reaktiver Haftklebstoffilm mit guter Push-Out-Festigkeit formuliert werden.

Das Vergleichsbeispiel V2 weist keine haftklebrigen Eigenschaften auf. Durch Erhöhung des Anteils der Reaktivkomponenten (entsprechend einer Absenkung des Polymeranteils an der Gesamtformulierung) kann bei einem dennoch den erfindungsgemäßen Kristallisierungskriterien entsprechenden Polymer ein erfindungsgemäßer haftklebriger Film erhalten werden (E11).

Die Beispiele E10 und E11 zeigen auf, dass es mit den dem Fachmann geläufigen Methoden der Formulierungsanpassung möglich ist, im der vorliegenden Schrift dargestellten Formulierungsfenster mit verschiedenen erfindungsgemäß gewählten polymeren Filmbildner-Matrices erfindungsgemäße reaktive Haftklebstofffilme herzustellen.

Die letzten zwei in der Tabelle dargestellten Versuche zeigen die Messung von Push-Out-Werten für einige nicht oder zu wenig kristalline und damit nicht erfindungsgemäße Matrixpolymere (Frischwerte) anhand der Beispiele V4 und V5.

Anhand der Frischwerte der Beispiele V3 und V4 lässt sich erkennen, dass das dort gewählte Polymer - Pearlbond 360, EXP, ein Heißschmelz-Polyether-Polyurethan sehr geringer Kristallit-Schmelzenthalpie - mit keiner der gewählten Reaktivkomponenten gute Push-Out-Festigkeiten bei den Frischwerten ergibt. Verwendet man - wie im Beispiel V5 - ein amorphes Polymer im Sinne des Matrixpolymers, so ergeben sich noch geringere Festigkeiten. Mischt man das amorphe Polymer aus V4 mit einem den erfindungsgemäßen Kristallisierungskriterien entsprechenden Polymer (E12), so erhöht sich die Push-Out-Festigkeit in einen für reaktive Haftklebebänder angestrebten Bereich, erreicht aber nicht die guten Festigkeiten wie mit dem reinen erfindungsgemäßen Polymer (E1).

**Patentansprüche**

1. Reaktiver Haftklebstoffilm umfassend:

   (a) eine polymere Filmbildner-Matrix,
   (b) eine oder mehrere Reaktivkomponente(n) in einem Masseanteil von zumindest 30 Gew.-%, bezogen auf die Summe der Komponenten (a), (b) und (c), und
   (c) ein Reagenz, ausgewählt aus einem Initiator, insbesondere Radikalinitiator, oder einem Härter oder einem Aktivator,
   **dadurch gekennzeichnet, dass**
   die polymere Filmbildner-Matrix zu mindestens 50 Gew.-% ein kristallisierbares Polymer ist, das

   - beim Abkühlen ausgehend von einer Temperatur, die mindestens 30 K oberhalb der Peaktemperatur des Schmelzpeaks liegt, zumindest aber 100 °C beträgt, bei einer Abkühlgeschwindigkeit von 10 K/min in der dynamischen Differenzkalorimetrie (DSC) eine Kristallisationsenthalpie von weniger als 1 J/g aufweist; und
   - in reinem Zustand nach einer Lagerung für mindestens einen Monat in einem Temperaturbereich von 15 bis 25 °C und bei einer relativen Luftfeuchte im Bereich von 30 bis 70 % in der ersten Aufheizkurve der DSC-Messung bei einer Aufheizrate von 10 K/min eine Kristallit-Schmelzenthalpie von mindestens 15 mJ/mg aufweist.

2. Reaktiver Haftklebstofffilm nach Anspruch 1, **dadurch gekennzeichnet, dass** das kristallisierbare Polymer beim Aufheizen, das dem Abkühlen entsprechend Anspruch 1 unmittelbar folgt, in der DSC-Messung bei einer Aufheizrate von 10 K/min, ausgehend von einer Temperatur von - 140 °C, eine Kristallisationsenthalpie von weniger als 35 J/g aufweist, besonders bevorzugt weniger als 10 J/g.

3. Reaktiver Haftklebstofffilm nach einem der vorangehenden Ansprüche, **dadurch gekennzeichnet, dass** die Peaktemperatur des Schmelzpeaks des kristallisierbaren Polymers in der DSC-Messung im Bereich von 30 bis 150 °C liegt

4. Reaktiver Haftklebstofffilm nach einem der vorangehenden Ansprüche, **dadurch gekennzeichnet, dass** die Reaktivkomponente(n) (b) in einem Masseanteil von zumindest 35 Gew.-% vorliegen, bezogen auf die Summe der Komponenten (a), (b) und (c).

5. Reaktiver Haftklebstofffilm nach einem der vorangehenden Ansprüche, **dadurch gekennzeichnet, dass** die Reaktivkomponente(n) (b) in einem Masseanteil von weniger als 70 Gew.-% vorliegen.

6. Reaktiver Haftklebstofffilm nach einem der vorangehenden Ansprüche, **dadurch gekennzeichnet, dass** das kristallisierbare Polymer in reinem Zustand nach einer Lagerung für mindestens einen Monat in einem Temperaturbereich von 15 bis 25 °C und bei einer relativen Luftfeuchte im Bereich von 30 bis 70 % in der ersten Aufheizkurve der DSC-Messung bei einer Aufheizrate von 10 K/min eine Kristallit-Schmelzenthalpie von maximal 50 mJ/mg aufweist.

7. Reaktiver Haftklebstofffilm nach einem der vorangehenden Ansprüche, **dadurch gekennzeichnet, dass** eine Härtungsreaktion des Haftklebstofffilms in einem Temperaturbereich von 15 bis 30 °C initiiert werden kann.

8. Reaktiver Haftklebstofffilm nach einem der vorangehenden Ansprüche, **dadurch gekennzeichnet, dass** das kristallisierbare Polymer ausgewählt ist aus Polyurethanen, insbesondere solche, die von Polyesterdiolen abgeleitete Einheiten aufweisen.

9. Reaktiver Haftklebstofffilm nach einem der vorangehenden Ansprüche, **dadurch gekennzeichnet, dass** die eine oder mehrere Reaktivkomponente(n) Epoxid-, Hydroxy-, Acrylat-, Methacrylat- und/oder Isocyanatgruppen aufweisen.

**10.** Klebstofffilm-System umfassend zumindest zwei reaktive Haftklebstofffilme nach einem der vorangehenden Ansprüche, **dadurch gekennzeichnet, dass**
der erste Haftklebstofffilm einen Initiator, insbesondere einen Radikalinitiator, enthält und der zweite Haftklebstofffilm einen Aktivator oder einen Beschleuniger enthält.

Europäisches Patentamt
European Patent Office
Office européen des brevets

## EUROPÄISCHER TEILRECHERCHENBERICHT

nach Regel 62a und/oder 63 des Europäischen Patentübereinkommens. Dieser Bericht gilt für das weitere Verfahren als europäischer Recherchenbericht.

Nummer der Anmeldung
EP 21 17 7037

### EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| X,D | WO 2017/174303 A1 (TESA SE [DE]) 12. Oktober 2017 (2017-10-12)<br>* Zusammenfassung *<br>* Seite 3, Zeile 24 - Zeile 33 *<br>* Seite 6, Zeile 22 - Seite 9, Zeile 15 *<br>* Seite 12, Zeile 31 - Seite 13, Zeile 35 *<br>* Seite 16, Zeile 17 - Zeile 31 *<br>* Seite 23, Zeile 19 - Zeile 23 *<br>* Seite 28, Zeile 21 - Zeile 24; Ansprüche 1,3-6,9,10,12 *<br>----- | 1-10 | INV.<br>C09J7/10<br>C09J175/06<br>C09J167/00<br>C08G63/91 |
| X | WO 2019/207125 A1 (TESA SE [DE]) 31. Oktober 2019 (2019-10-31)<br>* Zusammenfassung *<br>* Seite 3, Zeile 5 - Zeile 12 *<br>* Seite 26, Zeile 8 - Zeile 11; Ansprüche 1-6,8; Beispiele 5,6 *<br>-----<br>-/-- | 1-10 | |
| | | | RECHERCHIERTE SACHGEBIETE (IPC) |
| | | | C09J |

### UNVOLLSTÄNDIGE RECHERCHE

Die Recherchenabteilung ist der Auffassung, daß ein oder mehrere Ansprüche, den Vorschriften des EPÜ nicht entspricht bzw. entsprechen, so daß nur eine Teilrecherche (R.62a, 63) durchgeführt wurde.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

1

| Recherchenort | Abschlußdatum der Recherche | Prüfer |
|---|---|---|
| München | 23. März 2022 | Meier, Stefan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04E09)

Seite 1 von 2

Europäisches Patentamt
European Patent Office
Office européen des brevets

# EUROPÄISCHER TEILRECHERCHENBERICHT

Nummer der Anmeldung
EP 21 17 7037

| EINSCHLÄGIGE DOKUMENTE | | | KLASSIFIKATION DER ANMELDUNG (IPC) |
|---|---|---|---|
| Kategorie | Kennzeichnung des Dokuments mit Angabe, soweit erforderlich der maßgeblichen Teile | Betrifft Anspruch | |
| X | EP 3 091 059 A1 (TESA SE [DE]) 9. November 2016 (2016-11-09) * Zusammenfassung * * Absätze [0015], [0034], [0046] - Absatz [0052]; Ansprüche 1,3,4,8,11,14-17; Beispiel K9 * ----- | 1-10 | |
| X | US 2008/113184 A1 (YOSHIDA SHINICHIRO [JP] ET AL) 15. Mai 2008 (2008-05-15) * Zusammenfassung * * Absätze [0017], [0018], [0023], [0031] - Absätze [0033], [0036]; Ansprüche 1,4,5,6 * ----- | 1-10 | RECHERCHIERTE SACHGEBIETE (IPC) |

1

EPO FORM 1503 03.82 (P04C12)

Seite 2 von 2

Europäisches Patentamt
European Patent Office
Office européen des brevets

# UNVOLLSTÄNDIGE RECHERCHE ERGÄNZUNGSBLATT C

Nummer der Anmeldung
EP 21 17 7037

**Vollständig recherchierbare Ansprüche:**
8

**Unvollständig recherchierte Ansprüche:**
1-7, 9, 10

**Grund für die Beschränkung der Recherche:**

**Die Gründe, warum die Anmeldung nicht vollständig recherchiert werden konnte, sind in der vorläufigen Stellungnahme als Anhang zum Ergebnis unvollständigen Recherche aufgeführt (EPA Form 1707).**

## ANHANG ZUM EUROPÄISCHEN RECHERCHENBERICHT ÜBER DIE EUROPÄISCHE PATENTANMELDUNG NR.

EP 21 17 7037

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-03-2022

| Im Recherchenbericht angeführtes Patentdokument | Datum der Veröffentlichung | Mitglied(er) der Patentfamilie | Datum der Veröffentlichung |
|---|---|---|---|
| WO 2017174303 A1 | 12-10-2017 | CA 3019689 A1 | 12-10-2017 |
| | | CN 108884363 A | 23-11-2018 |
| | | EP 3440143 A1 | 13-02-2019 |
| | | JP 2019513885 A | 30-05-2019 |
| | | KR 20180127470 A | 28-11-2018 |
| | | TW 201738342 A | 01-11-2017 |
| | | US 2019077997 A1 | 14-03-2019 |
| | | WO 2017174303 A1 | 12-10-2017 |
| WO 2019207125 A1 | 31-10-2019 | CN 112262190 A | 22-01-2021 |
| | | DE 102018206632 A1 | 31-10-2019 |
| | | EP 3784742 A1 | 03-03-2021 |
| | | KR 20210003874 A | 12-01-2021 |
| | | US 2021214593 A1 | 15-07-2021 |
| | | WO 2019207125 A1 | 31-10-2019 |
| EP 3091059 A1 | 09-11-2016 | KEINE | |
| US 2008113184 A1 | 15-05-2008 | CN 101200623 A | 18-06-2008 |
| | | JP 2008144141 A | 26-06-2008 |
| | | KR 20080044175 A | 20-05-2008 |
| | | TW 200844205 A | 16-11-2008 |
| | | US 2008113184 A1 | 15-05-2008 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2014202402 A
- WO 2015062809 A
- WO 2018104053 A
- WO 2019101728 A
- WO 2017174303 A
- WO 2017186528 A
- WO 2015150251 A
- WO 2017021085 A
- WO 2017102282 A
- US 3117099 A
- US 3018262 A
- US 6908722 B1
- WO 2015174303 A


### In der Beschreibung aufgeführte Nicht-Patentliteratur


- **GERD HABENICHT.** Kleben - Grundlagen, Technologien, Anwendungen. Springer, 2009
- *CHEMICAL ABSTRACTS,* 26762-93-6
- *CHEMICAL ABSTRACTS,* 80-15-9
- *CHEMICAL ABSTRACTS,* 26762-92-5
- *CHEMICAL ABSTRACTS,* 3425-61-4
- *CHEMICAL ABSTRACTS,* 5809-08-5
- *CHEMICAL ABSTRACTS,* 34562-31-7
- *CHEMICAL ABSTRACTS,* 132-16-1
- *CHEMICAL ABSTRACTS,* 14325-24-7
- *CHEMICAL ABSTRACTS,* 3317-67-7
- *CHEMICAL ABSTRACTS,* 387859-70-3
- *CHEMICAL ABSTRACTS,* 94928-86-6
- *CHEMICAL ABSTRACTS,* 50525-27-4
- Tackifier Resins. **VON DONATAS SATAS.** Handbook of Pressure Sensitive Adhesive Technology. van Nostrand, 1989
- *CHEMICAL ABSTRACTS,* 2386-87-0
- *CHEMICAL ABSTRACTS,* 53879-54-2
- *CHEMICAL ABSTRACTS,* 16969-10-1
- *CHEMICAL ABSTRACTS,* 2530-85-0
- *CHEMICAL ABSTRACTS,* 10595-06-9
- *CHEMICAL ABSTRACTS,* 48145-04-6